(19) Europäisches Patentamt
European Patent Office
Office européen des brevets

(11) **EP 3 887 754 B1**

(12) **EUROPÄISCHE PATENTSCHRIFT**

(45) Veröffentlichungstag und Bekanntmachung des Hinweises auf die Patenterteilung:
**30.10.2024  Patentblatt 2024/44**

(21) Anmeldenummer: **19813456.1**

(22) Anmeldetag: **27.11.2019**

(51) Internationale Patentklassifikation (IPC):
**G01B 9/02** *(2022.01)*    **G01B 9/02098** *(2022.01)*
**G02B 21/14** *(2006.01)*    **G03H 1/04** *(2006.01)*

(52) Gemeinsame Patentklassifikation (CPC):
**G01B 9/02098; G02B 21/14;** G03H 2001/0452;
G03H 2001/0454; G03H 2223/17; G03H 2223/26

(86) Internationale Anmeldenummer:
**PCT/EP2019/082799**

(87) Internationale Veröffentlichungsnummer:
**WO 2020/109419 (04.06.2020 Gazette 2020/23)**

(54) **VERFAHREN UND INTERFEROMETER ZUR BESTIMMUNG EINER EINGANGSPHASE UND/ODER EINER EINGANGSAMPLITUDE EINES EINGANGSLICHTFELDS**

METHOD AND INTERFEROMETER FOR DETERMINING AN INPUT PHASE AND/OR AN INPUT AMPLITUDE OF AN INPUT LIGHT FIELD

PROCÉDÉ ET INTERFÉROMÈTRE POUR DÉTERMINER UNE PHASE D'ENTRÉE ET/OU UNE AMPLITUDE D'ENTRÉE D'UN CHAMP LUMINEUX D'ENTRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2018  DE 102018130162**

(43) Veröffentlichungstag der Anmeldung:
**06.10.2021  Patentblatt 2021/40**

(73) Patentinhaber: **Berz, Martin**
**81675 München (DE)**

(72) Erfinder: **Berz, Martin**
**81675 München (DE)**

(74) Vertreter: **Global IP Europe Patentanwaltskanzlei Pfarrstraße 14**
**80538 München (DE)**

(56) Entgegenhaltungen:
**DE-A1- 102016 110 362     US-A1- 2017 059 301**

• **GRILLI S ET AL: "Whole optical wavefields reconstruction by Digital Holography", OPTICS EXPRESS, OSA PUBLISHING, US, vol. 9, no. 6, 10 September 2001 (2001-09-10), pages 294 - 302, XP002364435, ISSN: 1094-4087, DOI: 10.1364/OE.9.000294**

## EP 3 887 754 B1

**Beschreibung**

Die vorliegende Offenbarung betrifft ein Verfahren zur Bestimmung einer Eingangsphase und/oder einer Eingangsamplitude eines Eingangslichtfelds. Ferner betrifft die Offenbarung ein Interferometer und eine Signalverarbeitungsvorrichtung, jeweils zur Bestimmung einer Eingangsphase und/oder einer Eingangsamplitude eines Eingangslichtfelds. Weitere Aspekte der vorliegenden Offenbarung betreffen Verwendungen eines Verfahrens zur Bestimmung einer Eingangsphase und/oder einer Eingangsamplitude eines Eingangslichtfelds.

Optische Interferometer dienen mitunter der Rekonstruktion der Phase und/oder der Amplitude eines Lichtfelds. Beispielsweise ermöglicht dies eine dreidimensionale Bildrekonstruktion. Insbesondere soll aus einer mit einem Detektor gemessenen Intensität eines Lichtfelds, das mit einem Objekt in Wechselwirkung getreten ist, die räumliche Lage (z.B. die Position und/oder die Struktur) des Objekts bzw. einzelner Punkt des Objekts bestimmt werden.

Bei herkömmlichen optischen Systemen ergibt sich oftmals das Problem, dass die laterale Auflösung und/oder die axiale Auflösung (d.h. die Tiefenschärfe) des Interferometers begrenzt sind und damit die Bildrekonstruktion erschweren. Zudem ist es möglich, dass man bei herkömmlichen Interferometeraufbauten, die einen externen Referenzstrahl (also einen Referenzstrahl, der nicht durch das Objekt beeinflusst wurde) verwenden, bei der Konstruktion des optischen Systems limitiert ist. Diese Limitationen sind bei sogenannten Selbstreferenzsystemen, die auf einen externen Referenzstrahl verzichten, geringer.

Die internationale Veröffentlichungsschrift WO 2017/211 665 A1 beschreibt ein Verfahren zur referenzstrahlfreien Bestimmung einer Phase eines Eingangsstrahlenbündels. Die Veröffentlichung "Whole optical wavefields reconstruction by Digital Holography", von S. Grilli et al., Optics Express, OSA Publishing, Bd. 9, Nr. 6 (2001-09-10), Seiten 294-302 beschreibt die Verwendung eines digitalen Holographieverfahrens für die Rekonstruktion von Wellenfeldern.

Eine Aufgabe besteht darin, ein verbessertes Verfahren zur Bestimmung einer Eingangsphase und/oder einer Eingangsamplitude eines Eingangslichtfelds in Selbstreferenz anzugeben. Ferner sollen ein verbessertes Interferometer und eine verbesserte Signalverarbeitungsvorrichtung, jeweils zur Bestimmung einer Eingangsphase und/oder einer Eingangsamplitude eines Eingangslichtfelds, angegeben werden. Insbesondere kann das Verfahren für inkohärentes Licht und/oder für lediglich partiell kohärentes Licht anwendbar sein.

Diese Aufgabe wird gelöst durch ein Verfahren zur Bestimmung einer Eingangsphase und/oder einer Eingangsamplitude nach dem Patentanspruch 1 und ein Interferometer nach dem Patentanspruch 11.

Gemäß zumindest eines Ausführungsbeispiels umfasst ein hier beschriebenes Verfahren zur Bestimmung einer Eingangsphase und/oder einer Eingangsamplitude eines Eingangslichtfelds die folgenden Schritte:

    a) Amplitudenteilung des Eingangslichtfelds in ein erstes Lichtfeld und ein zweites Lichtfeld;

    b) Propagation des ersten Lichtfelds und des zweiten Lichtfelds derart, dass das erste Lichtfeld und das zweite Lichtfeld unterschiedliche geometrische Pfadlängen und identische optische Pfadlängen durchlaufen und das propagierte zweite Lichtfeld relativ zu dem propagierten ersten Lichtfeld defokussiert ist;

    c) Amplitudenüberlagerung und Abbildung des propagierten ersten Lichtfelds und des propagierten zweiten Lichtfelds auf einen Detektor derart, dass jeweils ein erster Spot des propagierten ersten Lichtfelds und jeweils ein zweiter Spot des propagierten zweiten Lichtfelds auf dem Detektor zu einem gemeinsamen Ausgangsspot eines Ausgangslichtfelds interferieren und das Ausgangslichtfeld an dem Detektor ein Interferenzmuster erzeugt, wobei der jeweils erste Spot des ersten Lichtfelds und der jeweils zweite Spot des zweiten Lichtfelds, die zu einem gemeinsamen Ausgangsspot des Ausgangslichtfelds interferieren, aus demselben Eingangsspot des Eingangslichtfelds hervorgehen und wobei das Ausgangslichtfeld wenigstens drei Ausgangsspots aufweist, für die gilt:

        (i) das Ausgangslichtfeld ist an unterschiedlichen Ausgangsspots der wenigstens drei Ausgangsspots frei von einer gegenseitigen Kohärenz und
        (ii) das Ausgangslichtfeld weist innerhalb eines Ausgangsspots der wenigstens drei Ausgangsspots zumindest partielle räumliche Kohärenz auf;

    d) Messen zumindest eines Teils des Interferenzmusters mit dem Detektor und Bestimmen eines komplexen Interferenzterms aus dem gemessenen Interferenzmuster; und

    e) Zumindest teilweises Ermitteln der Eingangsphase und/oder der Eingangsamplitude aus dem komplexen Interferenzterm.

Ausführungsbeispiele eines hier beschriebenen Verfahrens können in zumindest einer der folgenden Anwendungen Verwendung finden:

-   elektronische Fokussierung
-   Bildkorrektur, insbesondere Schärfen eines Bildes;

- Aberrationskorrektur eines optischen Systems;
- Vermessung der Oberflächenstruktur eines dreidimensionalen Objekts;
- Vermessung von Objekten mit zeitlich partiell inkohärenten Lichtquellen und/oder mittels Fotolumineszenz;
- Vermessung des Aufbaus dünner Schichten;
- Messung von Phasenobjekten, insbesondere phasensensitive Hellfeld-Messung oder Dunkelfeld-Mikroskopie;
- Lagebestimmung eines Objektes in einem dreidimensionalen Raum.

Gemäß zumindest eines Ausführungsbeispiels umfasst ein Interferometer zur Bestimmung einer Eingangsphase und/oder einer Eingangsamplitude eines Eingangslichtfelds gemäß Anspruch 11 unter anderem eine Teilungsvorrichtung, eine Abbildungsvorrichtung und einen Detektor. Die Teilungsvorrichtung definiert einen ersten Interferometerarm und einen zweiten Interferometerarm, wobei der zweite Interferometerarm eine Defokussierungseinheit aufweist. Die Teilungsvorrichtung ist dazu eingerichtet, das Eingangslichtfeld mittels Amplitudenteilung in ein erstes Lichtfeld und ein zweites Lichtfeld aufzuteilen. Die Teilungsvorrichtung und die Abbildungsvorrichtung sind dazu eingerichtet und justiert, das entlang des ersten Interferometerarms propagierte erste Lichtfeld und das entlang des zweiten Interferometerarms propagierte zweite Lichtfeld derart mittels Amplitudenüberlagerung zu überlagern und derart auf den Detektor abzubilden, dass jeweils ein erster Spot des ersten Lichtfelds und jeweils ein zweiter Spot des zweiten Lichtfelds an dem Detektor zu einem gemeinsamen Ausgangsspot eines Ausgangslichtfelds interferieren und das Ausgangslichtfeld an dem Detektor ein Interferenzmuster erzeugt. Der Detektor ist dazu eingerichtet, zumindest einen Teil des Interferenzmusters zu messen. Die Defokussierungseinheit ist dazu eingerichtet, das entlang dem zweiten Interferometerarm propagierende zweite Lichtfeld zu defokussieren. Die Defokussierungseinheit, die Teilungsvorrichtung, die Abbildungsvorrichtung und der Detektor sind derart eingerichtet und justiert, dass der Ausgangsspot auf eine Vielzahl von Spotpixeln trifft, wobei für wenigstens 10% der Spotpixel ein Phasenunterschied modulo $2\pi$ zwischen dem ersten Lichtfeld und dem zweiten Lichtfeld am Ort der Spotpixel um mehr als $0{,}1\,\pi$ variiert.

Weitere Aspekte ergeben sich aus den Patentansprüchen, der Beschreibung, den Figuren sowie den in Zusammenhang mit den Figuren beschriebenen Ausführungsbeispielen.

Im Folgenden werden Ausführungsbeispiele eines hier beschriebenen Verfahrens, eines hier beschriebenen Interferometers, einer hier beschriebenen Signalverarbeitungsvorrichtung sowie von hier beschriebenen Verwendungen erläutert. Hierfür wird auch teilweise auf Figuren Bezug genommen. In den Figuren werden gleiche, gleichartige, ähnliche oder gleichwirkende Elemente mit denselben Bezugszeichen versehen. Die Figuren und die Größenverhältnisse der in den Figuren dargestellten Elemente untereinander sind nicht als maßstäblich zu betrachten.

Die Figur 1 zeigt schematisch ein Ausführungsbeispiel eines hier beschriebenen Interferometers sowie eines hier beschriebenen Verfahrens.

Die Figur 2 zeigt schematisch eine axiale Verschiebung zweier Spots zueinander.

Die Figur 3 zeigt schematisch die Konstruktion einer Hauptebene.

Die Figur 4 zeigt schematisch ein Mikrolinsenarray für ein Ausführungsbeispiel eines hier beschriebenen Interferometers.

Die Figur 5 zeigt schematisch die Verschiebung einer fokalen Lage von Strahlenbündeln.

Die Figur 6 zeigt schematisch ein Ausführungsbeispiel einer hier beschriebenen Signalverarbeitungsvorrichtung.

Die Figuren 7 und 8 zeigen jeweils ein schematisches Ausführungsbeispiel eines hier beschriebenen Interferometers sowie eines hier beschriebenen Verfahrens.

Manche der hier beschriebenen Ausführungsbeispiele eines Verfahrens können insbesondere mit hier beschriebenen Ausführungsbeispielen eines Interferometers und/oder mit hier beschriebenen Ausführungsbeispielen einer Signalverarbeitungsvorrichtung durchgeführt werden. Das heißt, sämtliche im Zusammenhang mit Ausführungsbeispielen des Verfahrens offenbarten Merkmale sind, mutatis mutandis, für Ausführungsbeispiele eines Interferometers und/oder Ausführungsbeispiele einer Signalverarbeitungsvorrichtung offenbart und umgekehrt.

In der gesamten vorliegenden Offenbarung kann die Verwendung der Artikel "ein/e" und/oder "der/die/das" so verstanden werden, dass sie sowohl das Singular als auch das Plural (im Sinne von "mindestens ein/e") beinhalten, sofern nicht explizit etwas anderes angegeben ist (bspw. mittels "genau ein/e"). Die Begriffe "umfassen", "enthalten", "beinhalten", "aufweisen", etc., sind inklusiv und bedeuten, dass zusätzlich zu den aufgezählten Elementen weitere Elemente vorliegen können.

Ein hier beschriebenes Verfahren kann zur Bestimmung einer Eingangsphase und/oder einer Eingangsamplitude eines Eingangslichtfelds eingerichtet und/oder geeignet sein. Dies bedeutet, dass das Verfahren insbesondere dazu eingerichtet und/oder geeignet sein kann, die Eingangsphase und/oder die Eingangsamplitude zumindest eines Eingangsspots des Eingangslichtfelds zu bestimmen. Die Begriffe "Phase", "Amplitude" und "Lichtfeld" werden hierbei und im Folgenden in ihrem üblichen physikalischen Kontext verwendet. Das Verfahren ist durch die Verwendung des Begriffes "Lichtfeld" jedoch nicht auf sichtbare elektromagnetische Strahlung beschränkt. Vielmehr wird nicht sichtbare elektromagnetische Strahlung, wie beispielsweise Infrarotstrahlung und/oder UV-Strahlung, ebenfalls mit dem Begriff "Lichtfeld" abgedeckt. Die hier beschriebenen Prinzipien können ferner auf andere Vektorfelder, wie beispielsweise Teilchenstrahlung, angewendet werden.

Ein "Lichtfeld" (auch genannt: Feld) kann generell einem Strahlenbündel oder einer Überlagerung mehrerer Strahlenbündel entsprechen. Im Allgemeinen besteht ein Lichtfeld aus mehreren zueinander inkohärenten Strahlenbündeln. Ein Strahlenbündel und/oder ein Lichtfeld kann aus mehreren Lichtstrahlen (auch genannt: Strahlen) aufgebaut sein, wobei jeder Lichtstrahl einer Propagation eines Punktes eines Querschnitts des Strahlenbündels entlang der Ausbreitungsrichtung entspricht. Der Querschnitt kann der Wellenfront entsprechen. Jeder Lichtstrahl kann somit senkrecht zur Wellenfront verlaufen. Beispielsweise handelt es sich bei einem Strahlenbündel um ein annähernd Gauß'sches Strahlenbündel, wobei "annähernd" in diesem Zusammenhang physikalisch bedingte Imperfektionen beinhaltet. Ein Strahlenbündel kann beispielsweise mit einem elektromagnetischen Vektorfeld beschrieben werden, das entlang einer Ausbreitungsrichtung propagiert. Quer, insbesondere senkrecht, zum Strahlenbündel weist dieses einen zweidimensionalen Querschnitt auf. Hierbei und im Folgenden kann eine z-Richtung im Raum die Ausbreitungsrichtung sein, während der Querschnitt durch die x- und die y-Richtung aufgespannt werden kann.

Zumindest eines der hier beschriebenen Lichtfelder, insbesondere jedes der hier beschriebenen Lichtfelder, kann zeitlich und/oder räumlich kohärent sein. Im Allgemeinen kann ein Lichtfeld von einem Objekt abgestrahlt und/oder erzeugt werden. Bei dem Objekt kann es sich beispielsweise um eine Lichtquelle und/oder um ein Bild handeln. Das Objekt kann beispielsweise zumindest eine Punktquelle (z.B. eine Punktlichtquelle) enthalten (im Folgenden auch: "Objektpunkt" genannt). Das Objekt kann eine Superposition vieler Punktquellen sein, wobei jeder Punktquelle ein Eingangslichtstrahl zugeordnet werden kann. Allgemein kann das Objekt zeitlich inkohärentes oder zeitlich kohärentes Licht abstrahlen. Typischerweise ist das abgestrahlte Licht einer Punktquelle räumlich kohärent und kann zu einem Strahlenbündel zusammengefasst werden. Typischerweise entspricht ein derartiges Strahlenbündel einer Teilmenge der von der Punktquelle emittierten Lichtstrahlen. Diese Teilmenge kann einem bestimmten Raumwinkelsegment entsprechen. Typischerweise sind die Lichtstrahlen in einem derartigen Strahlenbündel zueinander kohärent, insbesondere im Fall einer Punktquelle. Das abgestrahlte Licht unterschiedlicher Objektpunkte kann zueinander inkohärent sein, sowohl zeitlich wie räumlich. Eine Punktquelle kann auch Eingangsspot des Eingangslichtfeldes genannt werden und/oder erzeugen. Das Objekt kann Licht aktiv emittieren und/oder ein Objekt kann mit einem Lichtfeld wechselwirken (z.B. mittels Reflexion), wodurch Licht abgestrahlt wird. Im Fall einer Punktquelle als Objekt kann die Punktquelle Licht aktiv emittieren und/oder ein Licht abstrahlender und/oder reflektierender Punkt sein.

Im Rahmen dieser Anmeldung ist es möglich, dass ein zweites Lichtfeld (E2) aus einem ersten Lichtfeld (E1) durch zeitliche und/oder räumliche Verschiebung entstanden ist. In diesem Fall kann das zweite Lichtfeld beispielsweise durch die folgende Formel (1) beschrieben werden:

$$E2(x + \Delta x, y + \Delta y, z + \Delta z, t + \Delta t) = E1(x, y, z, t), \quad (1)$$

wobei eine zeitliche Verschiebung im Allgemeinen über einen Pfadunterschied $\Delta L$ erzeugt werden kann, d.h. $\Delta t = \Delta L/c$ (c ist die Lichtgeschwindigkeit). Ist ein derart erzeugtes zweites Lichtfeld für beliebige Parameter $\Delta x$, $\Delta y$, $\Delta z$, $\Delta t$ zu dem ersten Lichtfeld kohärent (d.h. wenn es Interferenz gibt), so kann das erste Lichtfeld als kohärent bezeichnet werden. Liegt die Kohärenz nicht für alle Parameter, aber für zumindest einige geeignete Parameter vor, so wird das erste Lichtfeld gewöhnlicherweise als partiell kohärent bezeichnet. Es wird hierbei vorausgesetzt, dass zumindest einer der Parameter $\Delta x$, $\Delta y$, $\Delta z$, $\Delta t$ von Null verschieden ist. Ist einer der Ortsparameter von Null verschieden, so heißt das Lichtfeld (partiell) räumlich kohärent. Falls $\Delta t$ von Null verschieden ist, so heißt das zweite Lichtfeld (partiell) zeitlich kohärent. Insbesondere kann das zweite Lichtfeld räumlich und zeitlich partiell kohärent sein. Falls es keine von Null verschiedenen Parameter $\Delta x$, $\Delta y$, $\Delta z$, $\Delta t$ gibt, so dass das erste Lichtfeld zu dem zweiten Lichtfeld partiell kohärent ist, wird das zweite Lichtfeld als inkohärent bezeichnet. Dies gilt analog für das erste Lichtfeld und/oder für anderweitige Lichtfelder, die über die obige Gleichung in ein anderes Lichtfeld übergehen.

Bei der Bedingung der räumlichen Kohärenz kann für $\Delta x$, $\Delta y$, $\Delta z$ der Wertebereich auf die Größe des Detektors beschränkt sein. Feldpunkte wo das Feld näherungsweise Null ist, werden typischerweise ausgenommen. Das Feld ist an einem Punkt näherungsweise Null, wenn die Intensität höchstens 0,1 (oder kleiner 0,05 oder kleiner 0,01 oder kleiner 0,001) des Maximalwerts der Intensität beträgt.

Im Rahmen dieser Offenbarung ist es möglich, dass zwei Lichtfelder, z.B. zwei Spots, überlagert werden (d.h. überlappen). Die Spots sind zueinander kohärent, wenn die Überlagerung Interferenzen zeigt. Die Lichtfelder, z.B. Spots, heißen zueinander inkohärent, wenn die Überlagerung keine Interferenzen zeigt.

Ein mittels eines optischen Systems abgebildetes Lichtfeld enthält in der Regel zumindest einen Spot. Bei einem Spot handelt es sich insbesondere um einen kohärenten zweidimensionalen Teilbereich eines Lichtfelds. Ein Spot kann mehrere Lichtstrahlen des Strahlenbündels umfassen und/oder einem Strahlenbündel entsprechen. Ein Lichtfeld kann insbesondere eine Überlagerung mehrerer Spots sein. Im Fall eines inkohärent abstrahlenden Objekts (z. B. mehrerer inkohärenter Punktquellen) können zwei unterschiedliche Spots zueinander inkohärent sein.

Ein Spot kann aus der Abbildung einer (insbesondere einzelnen) Punktquelle als Objekt mittels einer abbildenden Optik hervorgehen. Die Abbildung kann einer Propagation des Strahlenbündels entsprechen, das dem Spot entspricht. Es ist dann möglich, dass es sich bei einem Spot um eine sogenannte Punktspreizfunktion (Englisch: "point spread function") handelt und/oder der Spot mittels einer Punktspreizfunktion beschrieben werden kann. Bei entsprechender Kenntnis der verwendeten Optik kann es möglich sein, aus dem Spot die Position des Objekts im Raum zu ermitteln. Der mittels Abbildung erzeugte Spot kann sich in der in der zu der Ebene des Objekts konjugierten Ebene im Fokus befinden. In anderen Ebenen kann sich der Spot außerhalb des Fokus (Englisch: "out of focus") befinden. Bei dem Spot kann es sich somit um eine Lichtfeldverteilung auf einer Schnittebene des Lichtfeldes handeln. Innerhalb eines Spots ist das Lichtfeld kohärent oder zumindest partiell kohärent.

Ein Lichtfeld (und insbesondere jeder Lichtstrahl und/oder jedes Strahlenbündel und/oder jeder Spot des Lichtfelds) kann eine, insbesondere komplexe, Amplitude aufweisen, deren Betragsquadrat einer Intensität entsprechen kann. Für die komplexe Amplitude A kann gelten: $A=|A|\cdot\exp(i\varphi)$, wobei $|A|$ der Betrag der komplexen Amplitude (im Folgenden auch nur "Amplitude") und $\varphi$ die Phase ist.

Erfindungsgemäß umfasst das Verfahren eine Amplitudenteilung des Eingangslichtfelds in ein erstes Lichtfeld und ein zweites Lichtfeld. Bei der Amplitudenteilung wird jeder Lichtstrahl eines einfallenden Lichtfeldes in mehrere (typischerweise zwei) Lichtstrahlen aufgeteilt. Jeder Lichtstrahl des einfallenden Lichtfelds ist somit mehreren ausgehenden Lichtfeldern zugeordnet, jedoch mit reduzierter Intensität (Amplitude). Die Amplitudenteilung erfolgt typischerweise durch die Verwendung teilweise reflektierender Flächen, wobei die Reflexion polarisationsabhängig sein kann, mittels eines Gitters oder mittels eines Polarisators. Im Gegensatz hierzu wird bei der Wellenfrontteilung das Lichtfeld in unterschiedliche Lichtstrahlen aufgeteilt, die anschließend zur Interferenz gebracht werden können. Hierbei ist jeder Lichtstrahl des einfallenden Lichtfelds jeweils einem einzigen ausgehenden Lichtfeld zugeordnet. Der umgekehrte Prozess zur Amplitudenteilung ist die Amplitudenüberlagerung.

Erfindungsgemäß umfasst das Verfahren eine Propagation des ersten Lichtfelds und des zweiten Lichtfelds derart, dass das propagierte zweite Lichtfeld relativ zu dem propagierten ersten Lichtfeld defokussiert ist. Insbesondere ist es möglich, dass die Defokussierung durch die Propagation erzeugt wird, in manchen Ausführungsbeispielen sogar ausschließlich durch die Propagation erzeugt wird. Beispielsweise wird das erste Lichtfeld entlang eines ersten Interferometerarms und das zweite Lichtfeld entlang eines zweiten Interferometerarms propagiert. Die Propagation entlang der beiden Interferometerarme kann frei von einer Abbildung mit einem abbildenden System (z.B. mit einer Linse) sein.

Bei der Defokussierung wird im Allgemeinen die axiale Position des ersten Lichtfelds relativ zu dem zweiten Lichtfeld verändert. Hierbei ist es möglich, dass nur die axiale Position eines der beiden Lichtfelder verändert wird oder die axiale Position beider Lichtfelder. Hierbei ist es möglich, dass die relative laterale Lage der beiden Felder nicht verändert wird (keine laterale Versetzung, auch genannt "lateral shear"), sondern nur die axiale Lage. Beispielsweise ist es möglich, dass für jeden der wenigstens drei Ausgangsspots nicht verändert wird. Lateral sind die Raumrichtungen normal zur Ausbreitungsrichtung des Strahlenbündels. Beispielsweise wird als Ausbreitungsrichtung des Stahlbündels die Ausbreitungsrichtung des Zentralstrahls gewählt. Ein Strahlenbündel ist umgekehrt dann in einem Punkt fokussiert, wenn in diesem Punkt die Strahlen des Strahlenbündels näherungsweise zusammenlaufen. Der Punkt nennt sich dann Fokuspunkt. Bei einer Defokussierung wird die Lage eines Fokuspunktes räumlich verschoben, das heißt, der vorherige Fokuspunkt ist nun kein Fokuspunkt mehr. In einer Ebene, die vorher den Fokuspunkt enthielt, sind die Lichtstrahlen des Lichtfeldes nun "aufgefächert"-der ehemalige Fokus entspricht somit einem vergrößerten Lichtfleck. Typischerweise ist das Erzeugen der Defokussierung aber frei von einer Abbildung - lediglich die Position des Fokus wird verschoben.

Das Lichtfeld wird mit einer Defokussierungseinheit defokussiert. Die Defokussierungseinheit kann translationsinvariant gegenüber seitlichen Verschiebungen (d.h. Verschiebungen senkrecht zur Propagationsrichtung) um einen Rasterabstand sein. Das heißt, dass ein um den Rasterabstand seitlich verschobenes Strahlenbündel durch die Defokussierungseinheit genauso verändert wird, wie das nicht verschobene Strahlenbündel. Dies ist beispielsweise bei der Verwendung einer einfachen Linse nicht gegeben. Diese Eigenschaft kann beispielsweise ermöglichen, dass das erste Lichtfeld im ersten Interferometerarm nach der Defokussierung mit dem zweiten Lichtfeld des zweiten Interferometerarms interferiert, unabhängig von einer seitlichen Verschiebung des Eingangslichtfelds, des ersten Lichtfelds und/oder des zweiten Lichtfelds. Die Translationsinvarianz gilt insbesondere für hinreichend große Rasterabstände und/oder für ganzzahlige Vielfache des Rasterabstands. Eine solche Rasterung der Defokussierungseinheit wird bei der Auswertung der Interferenzbilder im Allgemeinen beachtet.

Eine erfindungsgemäße Defokussierungseinheit ist eine zusätzliche Propagationsstrecke (auch genannt: geometrische Pfadlänge oder Propagationslänge), wodurch das zu defokussierende Lichtfeld eine zusätzliche Propagation entlang der Propagationsrichtung erfährt. Erfindungsgemäß durchlaufen das erste Lichtfeld und das zweite Lichtfeld unterschiedliche geometrische Pfadlängen. Die geometrische Pfadlänge kann dem geometrischen Pfad, also dem direkten Abstand zweier Punkte, entsprechen. Im Gegensatz hierzu wird für die sogenannte optische Pfadlänge in der Regel zusätzlich der Brechungsindex des Mediums, durch das das Feld propagiert, berücksichtigt. Bei der Ausgestaltung und/oder Justage der Defokussierungseinheit wird die optische Pfadlänge zwischen dem ersten Interferometerarm und dem zweiten Interferometerarm insbesondere nicht verändert. Beispielsweise wird die optische Pfadlänge konstant gehalten oder auf einen näherungsweisen optischen Pfadunterschied Null gebracht. "Näherungsweise Null" bedeutet hier einen optischen Pfadunterschied kleiner als die Kohärenzlänge. Die Kohärenzlänge des verwendeten Lichtfeldes kann höchstens 1 m (oder höchstens 1 mm, oder höchstens 100 $\mu$m, oder höchstens 10 $\mu$m oder höchstens 1 $\mu$m) sein.

Die Propagationsstrecke bereinigt um die Hauptebenenabstände des optischen Systems wird geometrische Propagationsstrecke genannt. Die optische Pfadlängendifferenz zwischen dem ersten Interferometerarm und dem zweiten Interferometerarm wird durch die Veränderung der geometrischen Propagationsstrecke typischerweise nicht verändert gegenüber einem Interferometer mit gleich langen identischen Armen.

Beispielsweise kann dies über den Einsatz von dielektrischen Schichten und/oder dielektrischen Platten und dem damit verbundenen Abstand der Hauptebenen im optischen System erreicht werden. Dadurch werden die Propagationsstrecke und die optische Pfadlänge unterschiedlich beeinflusst. Der vorliegenden Offenbarung liegt zugrunde, dass die Propagationsstrecke und die optische Pfadlänge durch geeignete optische Mittel getrennt oder unabhängig gestaltet oder beeinflusst werden kann. Insbesondere ist die Defokussierungseinheit derart eingerichtet und/oder justiert und/oder justierbar, dass das erste Lichtfeld und das zweite Lichtfeld unterschiedliche Propagationsstrecken und identische optische Pfadlängen durchlaufen.

Die Defokussierungseinheit kann alternativ oder zusätzlich zumindest eine der folgenden Komponenten enthalten: (i) ein, beispielsweise zweidimensionales, Gitter von Mikrolinsen, wobei die Mikrolinsen in dem Rasterabstand zueinander beabstandet sind; (ii) ein diffraktives optisches Element (DOE) mit einer Translationsinvarianz orthogonal zur Propagationsrichtung;

In zumindest einem Ausführungsbeispiel umfasst das Verfahren eine Amplitudenüberlagerung des propagierten ersten Lichtfelds und des propagierten zweiten Lichtfelds. Das propagierte erste Lichtfeld und das propagierte zweite Lichtfeld werden insbesondere zu einem Ausgangslichtfeld amplitudenüberlagert. Ferner umfasst das Verfahren eine Abbildung des überlagerten propagierten ersten und zweiten Lichtfelds (und/oder des Ausgangslichtfelds) auf einen Detektor. Die Amplitudenüberlagerung und die Abbildung erfolgen derart, dass jeweils ein erster Spot des propagierten ersten Lichtfelds und jeweils ein zweiter Spot des propagierten zweiten Lichtfelds auf dem Detektor zu einem gemeinsamen Ausgangsspot eines Ausgangslichtfelds interferieren und derart, dass das Ausgangslichtfeld an dem Detektor ein Interferenzmuster erzeugt. Hierbei gehen der jeweils erste Spot des ersten Lichtfelds und der jeweils zweite Spot des zweiten Lichtfelds, die zu einem gemeinsamen Ausgangsspot des Ausgangslichtfelds interferieren, aus demselben Eingangsspot des Eingangslichtfelds hervor. Das Verfahren kann somit beispielsweise translationsinvariant sein.

Die (optische) Abbildung auf den Detektor kann eine projektive Abbildung des Lichtfelds sein, mit Ausnahme von Aberrationen. Auch bei einer Propagatorabbildung kann es sich um eine solche projektive Abbildung handeln. Eine derartige Abbildung wird üblicherweise durch ein optisches System erzeugt, das aus Linsen, Spiegeln, Prismen, und/oder diffraktiven optischen Elementen besteht. Ein derartiges optisches System wird auch ein abbildendes Optiksystem genannt. Eine Abbildung erzeugt nicht notwendigerweise ein reelles Bild, auch virtuelle Bilder und/oder defokussierte Bilder sind möglich. Letzteres ist z.B. der Fall, wenn das Bild in einer Ebene betrachtet wird, die eine konjugierte Ebene oder näherungsweise eine konjugierte Ebene des optischen Systems ist. Eine näherungsweise konjugierte Ebene oder eine näherungsweise Fokuslage bedeutet, dass ein strahlender Objektpunkt einen Intensitäts-Bildpunkt erzeugt, der durch Defokus gegenüber der optimalen Fokuslage mindestens um den Faktor 2 (oder 5, oder 10 oder 50) lateral vergrößert ist. Diese konjugierte Ebene kann von der Lage des Objektes oder der Punktquelle abhängen, von dem oder der das Lichtfeld oder das Strahlenbündel ausgeht. Bei der Bestimmung der Fokuslage oder der konjugierten Ebene wird jeweils angenommen, dass das Lichtfeld in der Art ist, wie es von einem Objekt mit Objektpunkten ausgestrahlt wird. Daher kann bei der Konstruktion der Fokuslage oder der konjugierten Ebene auf dieses Objekt Bezug genommen werden.

Bei einem hier beschriebenen Verfahren ist es somit insbesondere möglich, dass ein Eingangsspot eines Eingangslichtfelds quasi mit seinem defokussierten Selbst zur Interferenz gebracht wird (sogenannte Selbstinterferenz). Es ist möglich, dass lediglich die Interferenz zwischen einem ersten Spot des ersten Lichtfelds und einem zweiten Spot des zweiten Lichtfelds, die aus demselben Eingangsspot des Eingangslichtfelds hervorgehen, zu einem, insbesondere einzigen, Ausgangsspot des Ausgangslichtfelds betrachtet wird. Es kann möglich sein, dass nur diese Interferenz in dem Interferometer auftritt. In manchen Ausführungsbeispielen kann es sich um ein sogenanntes referenzstrahlfreies Verfahren handeln. Ein externer Referenzstrahl, der nicht mit dem Objekt in Wechselwirkung getreten ist, liegt dann nicht vor.

Ein Punkt mit sogenannter Null-Interferenz ist ein Punkt des abgebildeten Ausgangsspots bei dem zwischen einem korrespondierenden Lichtstrahl des ersten Lichtfelds und einem korrespondierenden Lichtstrahl des zweiten Lichtfelds kein Phasenunterschied besteht, d. h. auch kein Phasenunterschied von $2\pi$. Ein Punkt mit sogenannter näherungsweisen Null-Interferenz ist ein Punkt analog wie oben, jedoch kann ein Phasenunterschied von einem ganzzahligen Vielfachen von $2\pi$ vorhanden sein, soweit der damit verbundene optische Pfadunterschied kürzer als die Kohärenzlänge des Lichtfeldes ist. Dies entspricht der Situation bei der es vom emittierenden Objektpunkt bis zum Detektor exakt (oder nahezu) gleich viele Oszillationen für das erste Lichtfeld und das zweite Lichtfeld gibt. Diese Eigenschaft kann unabhängig von der Wellenlänge sein, d. h. der Begriff ist auch für zeitlich partiell kohärentes Licht definiert. Bei stark inkohärentem Licht oder Licht mit sehr kurzer Kohärenzlänge ist die Bedingung der näherungsweisen Null-Interferenz bis auf eine verschwindend kleine Abweichung auf den Fall der Null-Interferenz eingeschränkt.

Aufgrund der chromatischen Aberration oder der Abhängigkeit des Brechungsindexes von der Wellenlänge in optischen Systemen sollte die Bedingung der Null-Interferenz für alle Wellenlängen erfüllt sein, die in dem Lichtfeld auftreten und/oder die mit dem gewählten Detektor gemessen werden können. Es kann daher notwendig sein, eine Korrektur oder Kompensation der chromatischen Aberration durchzuführen. Alternativ oder ergänzend ist es möglich die spektrale Detektionsbandbreite des Detektors einzuschränken. Hierfür kann beispielsweise zumindest ein Filter (beispielsweise zumindest ein Spektralfilter) eingesetzt werden. Der zumindest eine Filter kann beispielsweise an zumindest einer der folgenden Stellen platziert sein: in dem Strahlengang des ersten Lichtfelds (also im ersten Interferometerarm), in dem Strahlengang des zweiten Lichtfelds (also im zweiten Interferometerarm), in dem Strahlengang des Ausgangslichtfelds (also vor dem Detektor und nach den beiden Interferometerarmen), und/oder in dem Strahlengang des Eingangslichtfelds (also nach dem Objekt und vor den beiden Interferometerarmen). Beispielsweise ist es hierdurch möglich, die zulässigen optischen Pfadunterschiede für gewissen Spektren zu erzwingen.

Chromatische Aberration, soweit sie nicht korrigiert würde, kann die Sichtbarkeit der Interferenz wesentlich einschränken oder die Messbarkeit der Interferenz überhaupt verhindern. Kriterium für die Wesentlichkeit einer chromatischen Aberration ist ein resultierender Phasenunterschied größer als 0,01 rad (oder 0,1 rad, 0,2 rad, 0,5 rad, 1,0 rad oder sogar größer als $\pi$ rad). Bei dem hier beschriebenen Interferometer kann es möglich sein, dass die chromatische Aberration soweit korrigiert ist, dass sie für den eingesetzten und detektierten Wellenlängenbereich unwesentlich ist. Die eingesetzten Lichtfelder haben eine spektrale Breite, die beispielsweise der spektralen Breite einer der folgenden Lichtquellen entsprechen kann: ein Laser, eine Superlumineszenzdiode, eine Leuchtdiode (LED), ein lumineszierender Farbstoff und/oder einer Fotolumineszenz. Eine typische Referenz ist eine LED, die im sichtbaren Bereich (Peak-Wellenlänge 600 nm) eine Linienbreite (FWHM) von 30 nm±3 nm besitzt. Dies entspricht einer Kohärenzlänge von etwa 12 μm oder auch 20 Wellenlängen.

Analog wird der Begriff der gleichen optischen Pfadlänge' und der‚näherungsweisen gleichen optischen Pfadlänge' eingeführt. Dies ist Fall, wenn der optische Pfadunterschied für jede im Lichtfeld vorkommende bzw. detektierte Wellenlänge gleich ist oder näherungsweise gleich ist. Näherungsweise bedeutet hier, dass der optische Pfadunterschied kleiner als die Kohärenzlänge dieses Wellenbereichs ist.

Die Abbildung kann eine Propagation des Ausgangslichtfelds auf den Detektor umfassen oder eine solche Propagation sein. Alternativ oder zusätzlich kann die Abbildung ein Fokussieren des Ausgangslichtfelds auf den Detektor beinhalten. Der Detektor kann eine Vielzahl von Pixeln umfassen. Die Pixel sind voneinander räumlich getrennt und unterscheiden sich. Insbesondere ist es möglich, dass jeder Ausgangsspot auf eine Vielzahl von Pixeln des Detektors abgebildet wird.

Erfindungsgemäß weist das Ausgangslichtfeld wenigstens drei Ausgangsspots auf, für die gilt:

(i) das Ausgangslichtfeld ist an unterschiedlichen Ausgangsspots der wenigstens drei Ausgangsspots frei von einer gegenseitigen Kohärenz und
(ii) das Ausgangslichtfeld weist innerhalb eines Ausgangsspots der wenigstens drei Ausgangsspots zumindest partielle räumliche Kohärenz auf.

Die obige Bedingung (i) (frei von gegenseitiger Kohärenz) kann damit gleichgesetzt werden, dass die drei Ausgangsspots aus unterschiedlichen Objektpunkten des Objekts hervorgehen. Insbesondere wird keine Interferenz zwischen dem ersten Lichtfeld und dem zweiten Lichtfeld eines der drei Ausgangsspots mit dem ersten Lichtfeld und dem zweiten Lichtfeld eines weiteren der drei Ausgangsspots erzeugt.

Die obige Bedingung (ii) (partielle räumliche Kohärenz) bedeutet insbesondere, dass innerhalb eines Ausgangsspots zumindest eine teilweise, im Fall vollständiger Kohärenz insbesondere eine vollständige, Interferenz des korrespondierenden ersten und zweiten Lichtfelds erzeugt wurde. Eine vollständige Kohärenz zweier Lichtfelder ist beispielsweise dann gegeben, wenn die beiden Lichtfelder aus ein und derselben Lichtquelle (bspw. demselben Objektpunkt) stammen und der optische Pfadunterschied kleiner als die Kohärenzlänge des detektierten Lichtfeldes ist. Im Allgemeinen kann jeder Ausgangsspot aus einem, insbesondere einem einzigen, Objektpunkt des Objekts hervorgehen. In diesem Fall kann der Ausgangsspot einer Punktspreizfunktion (Englisch: "point spread function") des verwendeten optischen Systems gleichgesetzt werden. Bei dem verwendeten optischen System kann es sich um ein hier beschriebenes Interferometer handeln.

Die oben beschriebene Kohärenz bezieht sich insbesondere auf die räumliche Kohärenz. Zusätzlich können Effekte auftreten, die die zeitliche Kohärenz betreffen. Dies ist beispielsweise bei Einflüssen unterschiedlicher Wellenlängen des Lichts der Fall. Die Sichtbarkeit der Interferenz zwischen dem Strahlenbündel im ersten Interferometerarm und im zweiten Interferometerarm des Interferometers wird durch Einrichten einer näherungsweisen Null-Interferenz für einen Punkt des Spots im Ausgangsfeld verstärkt oder optimiert. Insbesondere kann die Vorrichtung so ausgeführt oder eingerichtet sein, dass jeder Spot im Ausgangsfeld und auf dem Detektor einen Punkt mit einer Null-Interferenz oder eine näherungsweisen Null-Interferenz besitzt. Mit dieser Bedingung kann sichergestellt werden, dass das gesamte Ausgangsfeld mit ein und derselben Einrichtung oder Justage des Interferometers gemessen werden kann und dass unterschiedliche Eingangsspots nicht nacheinander mit unterschiedlichen Justagen gemessen werden müssen. Das Interferometer erlaubt beispielsweise eine gleichzeitige Vermessung aller Strahlenbündel und/oder Eingangsspots im Eingangsfeld.

Die Punktspreizfunktion beschreibt im Allgemeinen die Abbildung eines idealisierten, punktförmigen Objekts durch ein abbildendes Optiksystem. Die Punktspreizfunktion und/oder eine ortsspezifische Emission an einem Punkt des Eingangslichtfelds kann dem Interferenzterm der Interferenz des ersten Lichtfelds mit dem konjugierten zweiten Lichtfeld entsprechen, analog zum komplexen Interferenzterm. Die Punktspreizfunktion hängt beispielsweise von der räumlichen Position des Objektpunktes ab (wie beispielsweise dessen axialen Abstand zum Detektor oder dessen laterale Lage bezüglich des Detektors). Die Punktspreizunktion kann im Rahmen einer Kalibrierung gemessen werden, z. B. durch ein Test-Objekt mit nur einem lichtemittierenden Punkt. Alternativ oder ergänzend kann die Punktspreizfunktion berechnet werden, soweit die Propagatorabbildung des ersten Lichtfelds auf das zweite Lichtfeld bekannt ist.

Erfindungsgemäß umfasst das Verfahren ein Messen zumindest eines Teils des Interferenzmusters mit dem Detektor, insbesondere mit dessen Pixeln. Das Messen kann amplituden- und/oder phasenaufgelöst erfolgen. Das gemessene Interferenzmuster ist eine Funktion des ersten Lichtfelds und des zweiten Lichtfelds, und folglich des Eingangslichtfelds, das durch das (bekannte) optische System der beiden Interferometerarme propagiert wurde. Das Interferenzmuster kann somit die Phaseninformation und die Amplitudeninformation des Eingangslichtfelds enthalten. Da das Eingangslichtfeld mit dem Objekt in Wechselwirkung getreten ist und/oder von dem Objekt emittiert wurde, kann das gemessene Interferenzmuster somit erforderliche Informationen zum strukturellen Aufbau und/oder zur Position des Objekts im Raum beinhalten. Aus dem Interferenzmuster kann somit das Objekt (insbesondere dessen Struktur und/oder dessen Position im Raum) rekonstruiert werden. Das optische System des Interferometers kann beispielsweise in einer Kalibrierungsmessung ohne das Objekt vermessen werden, sodass es möglich ist, dass nur das Objekt an sich eine Unbekannte darstellt.

Aus dem gemessenen Interferenzmuster wird ein komplexer Interferenzterm bestimmt. Bei dem komplexen Interferenzterm (IF) handelt es sich beispielsweise um das Produkt des konjugiert komplexen (conj) des propagierten zweiten Lichtfelds (E2) mit dem propagierten ersten Lichtfeld (E1),

$$ IF = conj(E2) \cdot E1 = |E1||E2| \cdot \exp i(\varphi1 - \varphi2), \qquad (2) $$

wobei $|E1|$ ($|E2|$) der Betrag des propagierten ersten Lichtfelds (propagierten zweiten Lichtfelds) und $\varphi1$ ($\varphi2$) die Phase des propagierten ersten Lichtfelds (des propagierten zweiten Lichtfelds) ist. Hierbei wurde im Betrachtungsbereich eine vollständige Kohärenz des ersten Lichtfelds und des zweiten Lichtfelds zueinander angenommen. Bei dem Lichtfeld kann es sich um ein Strahlenbündel handelt, das von einem Objektpunkt ausgeht. Der Betrachtungsbereich ist beispielsweise der Bereich wo sowohl das erste Lichtfeld als auch das zweite Lichtfeld ausreichend von Null verschieden sind. "Ausreichend von Null verschieden" bedeutet, dass der Absolutwert des ersten Lichtfelds (d.h. $|E1|$) und/oder des zweiten Lichtfelds (d.h. $|E2|$) jeweils größer ist als das 0,001-Fache (oder das 0,01-Fache, oder das 0,05-Fache oder das 0,1-Fache) des Maximalwerts von $|E1|$ bzw. $|E2|$.

In manchen Ausführungsbeispielen kann das Interferometer so eingerichtet sein, dass die gemeinsame Phasendifferenz (d.h. $\varphi1 - \varphi2$) für eine allgemeine Objektpunktlage nicht, auch nicht näherungsweise, im Betrachtungsbereich konstant ist. Eine allgemeine Objektpunktlage ist ein Punkt, wo sich weder das erste Lichtfeld im ersten Interferometerarm noch das zweite Lichtfeld im zweiten Interferometerarm auf dem Detektor im Fokus befinden. Im Fokus ist der Flächenbereich wo der jeweilige Betrag des ersten Lichtfelds und des zweiten Lichtfelds ausreichend von Null verschieden ist minimal und die gemeinsame Phasenfunktion des ersten und zweiten Lichtfelds kann in diesem kleinen Bereich nur wenig variieren. Durch eine Verschiebung des Objektpunktes bzw. des Detektors ist es jedoch möglich eine Konstellation herbeizuführen, wo sowohl das erste als auch das zweite Lichtfeld auf dem Detektor nicht, auch nicht näherungsweise, im Fokus sind. Diese Objektpunktlage wird eine allgemeine Objektpunktlage genannt. Die Phasendifferenz ist nicht näherungsweise konstant, wenn die Phasendifferenz im Betrachtungsbereich um mindestens 0,01 rad (oder 0,1 rad, 0,2 rad, 0,5 rad, 1,0 rad oder sogar um mindestens $\pi$ rad) variiert, wobei hierbei Phasensprünge um $2\pi$ nicht einbezogen werden und/oder die Phasendifferenz am Phasensprung stetig fortgesetzt wird. Die Darstellung des komplexen Interferenzterms in der Form der obigen Gleichung (2) wird im Folgenden auch kohärenter Interferenzterm oder komplexe Punktspreizfunktion genannt. Der kohärente Interferenzterm kann einem Strahlenbündel oder einem zugehörigen Spot im Eingangsfeld oder im Ausgangsfeld entsprechen. Näherungsweise vollständige Kohärenz bedeutet, dass die Pfadunterschiede für alle Punkte im Betrachtungsbereich kleiner als die Kohärenzlänge des detektierten Lichtfeldes sind und dass keine Effekte einer Einschränkung der zeitlichen Kohärenz auftreten.

In zumindest einem Ausführungsbeispiel ist das Interferometer so eingerichtet, dass die Variation oder Schwankungsbreite der Phasendifferenz des komplexen Interferenzterms im Betrachtungsbereich nicht aufgrund eines linearen Terms in der Phasendifferenz auftritt. Das heißt es gilt, dass die Variation oder Schwankungsbreite der Phasendifferenz im Betrachtungsbereich auch dann auftritt, wenn die Phasenfunktion um einen linearen Term korrigiert wird, und beispielsweise mit der Funktion $\varphi1 - \varphi2 + a\,x_p + b\,y_p + c$ dargestellt wird. $x_p$ und $y_p$ sind hierbei die Positionswerte des Feldes auf dem Detektor (z.B. die kartesischen Koordinaten in der Ebene) und a, b, und c sind Parameter die frei gewählt werden können um zu prüfen ob eine lineare Abhängigkeit der Phasendifferenz als Funktion der Positionswerte des Feldes auf dem Detektor vorliegt. Damit kann ausgeschlossen werden, dass die Phasenvariation der Phasendifferenz im Betrachtungsbereich lediglich das Ergebnis eines unterschiedlichen Einfallwinkels des ersten und des zweiten Lichtfelds ist. Damit kann für ein hier beschriebenes Interferometer sichergestellt werden, das die Variation der Phasendifferenz das Ergebnis einer Defokussierungseinheit ist. Eine Defokussierungseinheit kann eine Transformation des Lichtfeldes erzeugen, die zum Beispiel der Anwendung des Kirchhoff'schen Beugungsintegrals und/oder einer Lösung der Helmholtz Gleichung entspricht. Eine bloße Richtungsänderung wird durch die obige Bedingung ausgeschlossen.

Das an dem Detektor gemessene Interferenzmuster enthält neben dem komplexen Interferenzmuster weiterhin sogenannte Selbstinterferenzterme, die anhand einer Kalibrierung (bspw. durch ein Blockieren des ersten oder des zweiten Lichtfelds) ermittelt werden können.

Der komplexe Interferenzterm kann über die sogenannte "phase shifting"- oder "carrier-phase"-Methode ermittelt werden. Das gesamte Interferenzmuster kann neben dem komplexen Interferenzterm noch sogenannte Selbstinterferenzterme (bspw. $|E1|^2$ und $|E2|^2$) beinhalten. Für die Bestimmung des komplexen Interferenzterm wird der komplexe Interferenzterm typischerweise ohne die Selbstinterferenzterme bestimmt. In diesem Fall hat der komplexe Interferenzterm für ein Lichtfeld die Form gemäß der obigen Gleichung (2). Im Folgenden werden unter dem komplexen Interferenzterm die Werte ohne die Selbstinterferenzterme verstanden.

Beinhaltet das Lichtfeld mehrere zueinander inkohärente Strahlenbündel, so kann für jedes der Strahlenbündel ein kohärenter Interferenzterm existieren. Beim Messen des komplexen Interferenzterms wird die Summe der Einflüsse der kohärenter Interferenzterme erfasst. Die in diesem Fall gemessene Intensität (I) des Ausgangsfeldes auf dem Detektor kann wie folgt dargestellt werden:

$$I = I_{back} + 2 \cdot Re(IF) \qquad (3)$$

$I_{back}$ ist hierbei der sogenannte inkohärente Hintergrund, der auch die Selbstinterferenzterme enthält. IF ist der komplexe Interferenzterm, von dem der Realteil (Re) gemessen wird. Für die komplette Bestimmung des komplexen Interferenzterms kann es erforderlich sein, auch den Imaginärteil zu messen. Dies kann z.B. über die sogenannte "phase shifting"- oder "carrier-phase"-Methode ermittelt werden. Im Ergebnis wird IF dargestellt als:

$$IF = Re(IF) + i \cdot Im(IF). \qquad (4)$$

Für beispielsweise drei Eingangsspots, die zueinander inkohärent sind, kann der komplexe Interferenzterm die folgende Form annehmen:

$$IF = |E_{a1}||E_{a2}| \cdot e^{i(\varphi_{a1}-\varphi_{a2})} + |E_{b1}||E_{b2}| \cdot e^{i(\varphi_{b1}-\varphi_{b2})} + |E_{c1}||E_{c2}| \cdot e^{i(\varphi_{c1}-\varphi_{c2})}. \qquad (5)$$

Die Indizes a, b, c unterscheiden hierbei zwischen den drei verschiedenen Eingangsspots, während die Indizes 1,2 zwischen dem ersten Eingangslichtfeld und dem zweiten Eingangslichtfeld, das aus dem jeweiligen Eingangsspot erzeugt wird, unterscheiden. In dem beispielhaften Fall von drei Eingangsspots wird der komplexe Interferenzterm der Formel (2) in die Summe von drei Termen gemäß Formel (5) übergeführt. Jeder dieser drei Terme entspricht einem kohärenter Interferenzterm wie in Formel (2) dargestellt.

Bei dem komplexen Interferenzterm kann es sich beispielsweise um eine Überlagerung der Punktspreizfunktionen oder kohärenten Interferenzterme sämtlicher mittels des verwendeten optischen Systems abgebildeten Objektpunkte handeln. Das heißt, der komplexe Interferenzterm kann sich aus den Beiträgen der einzelnen Emitter des Objektes zusammensetzen. Die Bestimmung der Beiträge der einzelnen Emitter des Objektes zum komplexen Interferenzterms kann gleichbedeutend sein mit der digitalen Erzeugung eines Hologramms, wobei kein Referenzstrahl verwendet wird, sondern eine Selbstreferenz.

Das propagierte erste Lichtfeld und das propagierte zweite Lichtfeld wurden entlang eines vom Aufbau her bekannten ersten Interferometerarms bzw. entlang eines zweiten Interferometerarms propagiert. Die diesen Propagationen zugeordneten Propagatorabbildungen können aufgrund einer Kalibrierungsmessung bekannt sein. Alternativ oder zusätzlich kann aufgrund einer Kalibrierungsmessung eine Bibliothek von kohärenten Interferenztermen oder komplexen Punktspreizfunktionen bekannt sein.

Das Verfahren beinhaltet ferner ein zumindest teilweises Ermitteln der Eingangsphase und/oder der Eingangsamplitude des Eingangslichtfelds aus dem komplexen Interferenzterm. "Zumindest teilweise" beinhaltet hierbei auch ein "zumindest näherungsweises" ermitteln der Eingangsphase und/oder der Eingangsamplitude. Beispielsweise wird der komplexe Interferenzterm hierbei als gewichtete Überlagerung von kohärenten Interferenztermen dargestellt. Der Gewichtungskoeffizient für jeden kohärenten Interferenzterm ist eine komplexe Zahl. Die Überlagerung hat damit eine Amplitude und eine Phase. Die Bestimmung der Eingangsphase und/oder der Eingangsamplitude des Eingangslichtfelds kann somit als Bestimmung der komplexen Gewichtungskoeffizienten dargestellt werden.

Die Darstellung des komplexen Interferenzterms als Überlagerung von kohärenten Interferenztermen oder komplexen Punktspreizfunktionen kann eindeutig sein, abhängig davon wie viele unterschiedliche komplexe Punktspreizfunktionen für die Zerlegung zugelassen werden. Die Grenze für die Eindeutigkeit kann dem Auflösungsvermögen des Interferometers entsprechen.

Möglichkeiten zur Bestimmung des komplexen Interferenzterms aus einem Interferenzmuster sowie zur Ermittlung der Eingangsphase aus diesem sind beispielsweise in der veröffentlichten Patentanmeldung WO 2017/211 665 A1 beschrieben. Das in der besagten Patentanmeldung beschriebene Hauptstrahlenbündel geht hierbei in das erste Lichtfeld über und das beschriebene Vergleichsstrahlenbündel geht in das zweite Lichtfeld über.

Für das Ermitteln der Eingangsphase und/oder Eingangsamplitude kann der komplexe Interferenzterm als Superposition von gewichteten Teilinterferenztermen dargestellt werden. Bei den Teilinterferenztermen kann es sich um komplexe (z.B. kohärente) Spotinterferenzterme, komplexe Pixelinterferenzterme und/oder um Punktspreizfunktionen handeln. Die Gewichtung der einzelnen Terme der Superposition erfolgt typischerweise anhand der Amplitude. Die Amplitude ist gewöhnlicherweise reell, kann aber in der Darstellung als Superposition auch imaginär werden. Das komplexe Problem der Rekonstruktion der Eingangsphase kann somit in die Rekonstruktion der Phase einer Superposition der Teilinterferenzterme überführt werden, ähnlich einer Fourieranalyse. Allgemeiner kann die Zerlegung des komplexen Interferenzterms als eine Entwicklung einer Funktion in eine Summe von elementaren Basisfunktionen verstanden werden.

Im Fall der Bestimmung der Eingangsphase oder Eingangsamplitude ist es insbesondere möglich, dass zunächst eine IF-Phase oder ein komplexer Interferenzterm bestimmt wird. Die Bestimmung der IF-Phase oder eines komplexen Interferenzterms kann äquivalent sein zu einer Messung der Interferenz zwischen dem ersten Lichtfeld und dem zweiten Lichtfeld. Im Allgemeinen kann der komplexe Interferenzterm als Superposition der Interferenzen zugehörig zu den Spots des Eingangslichtfeldes dargestellt werden. Die Zerlegung des komplexen Interferenzterms in die Beiträge der einzelnen Spotinterferenzterme kann einen weiteren Auswertungsschritt erfordern. Aus der Kenntnis der Propagatorabbildung zwischen dem ersten Lichtfeld und dem zweiten Lichtfeld und/oder der Kenntnis der Punktspreizfunktionen der Interferometerarme kann eine Darstellung des komplexen Interferenzterms als Überlagerung einzelner Spotinterferenzterme erfolgen. Dies kann einer Zuordnung der komplexen Interferenzterme zu den Punktspreizfunktionen entsprechen. Die Eingangsphase eines inkohärenten Feldes kann unter Bezug auf die Eingangsspots des Eingangslichtfelds darstellbar sein.

Bei dem hier beschriebenen Verfahren ist es möglich, dass zumindest ein Teil der Lichtstrahlen des ersten Lichtfelds relativ zu den Lichtstrahlen des zweiten Lichtfelds aufgrund der Defokussierung phasenverschoben wird. Die Defokussierung und die anschließende Propagation sind insbesondere derart gewählt, dass für wenigstens 10% der Spotpixel ein Phasenunterschied zwischen dem ersten Lichtfeld und dem zweiten Lichtfeld am Ort der Spotpixel um mehr als $0,1\pi$ (beispielsweise um mehr als $0,2\pi$, $0,5\,\pi$, $\pi$ oder sogar mehr als $2\pi$) variiert. Phasensprünge werden hierbei z.B. über die stetige Fortsetzung der Phasenfunktion ausgeschlossen. Alternativ oder zusätzlich ist es möglich, dass ein Phasenunterschied zwischen dem propagierten ersten Lichtfeld und dem propagierten zweiten Lichtfeld an wenigstens 10% der Spotpixel ungleich $2k*\pi$ ist, mit k=...-2,-1,0,1,2,... Insbesondere liegt für zumindest einen Lichtstrahl des Ausgangslichtfelds keine Null-Interferenz vor, auch nicht näherungsweise.

Die Propagation (inklusive der Defokussierung) in Schritt b) erfolgt derart, dass das erste Lichtfeld und das zweite Lichtfeld für mindestens einen ersten Spot des ersten Lichtfelds und mindestens einen zweiten Spot des zweiten Lichtfelds gleiche optische Pfadlängen durchlaufen, mit Ausnahme eines für die Interferenz erforderlichen Gangunterschieds. Insbesondere durchlaufen das erste Lichtfeld und das zweite Lichtfeld vom Zeitpunkt ihrer Erzeugung aus dem gemeinsamen Eingangslichtfeld (also der Amplitudenteilung) bis zum Zeitpunkt ihrer Überlagerung zu dem Ausgangslichtfeld (also der Amplitudenüberlagerung) gleiche optische Pfadlängen, mit Ausnahme kleiner Verschiebungen für die Interferenz. Das Merkmal "gleiche optische Pfadlängen" zweier Spots und/oder zweier Lichtfelder ist insbesondere dann gegeben, wenn zumindest für jeweils einen Lichtstrahl der beiden Spots bzw. des Lichtfelds, insbesondere den Zentralstrahl, gleiche optische Pfadlängen oder näherungsweise gleiche optische Pfadlängen vorliegen. Der Zentralstrahl ist der entlang der zentralen optischen Achse laufende Lichtstrahl eines Lichtfeldes oder Strahlenbündels.

Die optische Pfadlänge wird hierbei und im Folgenden entlang der optischen Ausbreitungsrichtung des jeweiligen Lichtfeldes betrachtet. Die optische Pfadlänge (auch: "optische Weglänge", L) eines Mediums durch das ein Lichtfeld propagiert ist das Integral über den Brechungsindex des Mediums (n(x)) entlang der metrischen Propagationsstrecke (x):

$$L = \int n(x)dx. \quad (6)$$

Die geometrische Propagationsstrecke ist die metrische Propagationsstrecke reduziert um die Bereiche zwischen den Hauptebenen. Die Differenzen der geometrischen Propagationsstrecken können in den Formeln der geometrischen Optik verwandt werden. Die Bereiche zwischen den Hauptebenen können Bereiche sein über die die Strahlenbündel und/oder die Lichtstrahlen der Strahlenbündel unverändert transportiert werden können.

Ein optischer Pfadunterschied (auch: Gangunterschied) ist dann gegeben, wenn zwei Pfade den gleichen Anfangs- und Endpunkt haben, aber unterschiedliche optischen Pfadlängen.

In manchen Ausführungsbeispielen des Verfahrens ist das propagierte zweite Lichtfeld relativ zu dem propagierten ersten Lichtfeld entlang einer optischen Achse verschoben. Bei der optischen Achse kann es sich um eine Zentralachse eines verwendeten optischen Systems (bspw. eines verwendeten Interferometers) handeln. Insbesondere kann bei einem hier beschriebenen Interferometer ein geometrischer Gangunterschied zwischen dem propagierten ersten Lichtfeld und dem propagierten zweiten Lichtfeld vorhanden sein.

Gemäß zumindest eines Ausführungsbeispiels wird mit einer zusätzlichen Einstellvorrichtung ein optischer Gangunterschied zwischen dem ersten Lichtfeld und dem zweiten Lichtfeld eingestellt. Der Gangunterschied kann wenigstens ein Viertel der Wellenlänge des Eingangslichtfelds betragen. Die Wellenlänge des Eingangslichtfelds entspricht einer Peak-Wellenlänge des Eingangslichtfelds, bei der das Eingangslichtfeld ein globales Maximum aufweist. Der optische Gangunterschied kann für das zuvor erwähnte "phase shifting" Verfahren verwendet werden.

Das Eingangslichtfeld kann von einem Objekt mit einem abbildenden optischen System abgestrahlt und/oder erzeugt werden. In manchen Ausführungsbeispielen ist es möglich, dass das Eingangslichtfeld, bezogen auf eine (reelle oder virtuelle) Schnittebene, eine Superposition zueinander inkohärenter Eingangsspots des Eingangslichtfelds ist. Bei der Schnittebene kann es sich, zumindest näherungsweise, um eine konjugierte Ebene des abbildenden optischen Systems des Objekts handeln. Die Eingangsspots des Eingangslichtfelds können beispielsweise aus Objektpunkten des Objekts, die mittels des abbildenden optischen Systems des Objekts abgebildet wurden, hervorgehen.

In manchen Ausführungsbeispielen des Verfahrens wird für jeden Ausgangsspot ein komplexer Spotinterferenzterm ermittelt. Der komplexer Spotinterferenzterm kann einem kohärenten Interferenzterm entsprechen. Die Ermittlung des komplexen Spotinterferenzterms kann analog zur oben beschriebenen Ermittlung des komplexen Interferenzterms erfolgen, wobei das propagierte erste und zweite Lichtfeld durch das entsprechende erste und zweite Lichtfeld des betroffenen Ausgangsspots ersetzt werden. Der komplexe Interferenzterm wird als eine Superposition der komplexen Spotinterferenzterme dargestellt und/oder bei dem komplexen Interferenzterm handelt es sich um eine Superposition der komplexen Spotinterferenzterme.

In zumindest einem Ausführungsbeispiel wird jeder Ausgangsspot auf eine Vielzahl von Pixeln des Detektors abgebildet. Für jedes Pixel wird ein komplexer Pixelinterferenzterm ermittelt, analog zum oben beschriebenen Spotinterferenzterm. Der komplexe Spotinterferenzterm besteht aus den Werten der komplexen Pixelinterferenzterme. Beispielsweise wird der komplexe Spotinterferenzterm als Superposition der komplexen Pixelinterferenzterme dargestellt.

Im Allgemeinen sind unterschiedliche Punktquellen zueinander inkohärent. Falls das Eingangslichtfeld durch eine Vielzahl von Punktquellen erzeugt wird, wird zwischen zwei Lichtstrahlen des Eingangslichtfelds in der Regel nur dann eine Interferenz erzeugt, wenn die beiden Lichtstrahlen von der gleichen Punktquelle emittiert werden.

Eine Punktquelle wird durch das Interferometer als Spot abgebildet. Im Detektor kann jeder Spot des Eingangslichtfelds einen Spotinterferenzterm erzeugen. Im Idealfall würde eine explizite Messung eines Spotinterferenzterms derart erfolgen, dass alle anderen Punktquellen während der Messung abgedeckt (also "ausgeschaltet") sind und damit nur der einzige Spotinterferenzterm gemessen wird. Dann kommt nur Licht einer einzigen Punktquelle auf den Detektor und der Spotinterferenzterm wird isoliert von allen anderen möglichen Punktquellen. Entsprechend kann dieser Spot Interferenzterm in der Form von Formel (2) als kohärenter Interferenzterm dargestellt werden.

Die komplexen Spotinterferenzterme kommen einer Punktspreizfunktion des verwendeten Interferometers sehr nahe und können beispielsweise deren physikalische Repräsentanten sein. In manchen Ausführungsbeispielen können die komplexen Spotinterferenzterme einer Punktspreizfunktion entsprechen. Die Punktspreizfunktion kann aus komplexen Pixelinterferenztermen für jeden Pixel bestehen.

Jeder Ausgangsspot kann eine Weite aufweisen. Bei der Weite kann es sich beispielsweise um einen Durchmesser des Ausgangsspots am Ort des Detektors, insbesondere der Pixel des Detektors, handeln.

In manchen Ausführungsbeispielen werden das propagierte erste Lichtfeld und das propagierte zweite Lichtfeld, insbesondere in der Form des Ausgangslichtfelds, derart auf den Detektor abgebildet, dass sich der Detektor (insbesondere die Pixel des Detektors) näherungsweise in der Bildebene der Abbildung befindet. Dies wird oftmals auch als Fokuslage oder näherungsweise Fokuslage bezeichnet. Da das erste und das zweite Lichtfeld aufgrund der Defokussierungseinrichtung unterschiedliche Fokuslagen haben, kann die Fokus-Bedingung für die beiden Lichtfelder gleichzeitig nur näherungsweise erfüllt sein. Beispielsweise weicht die Bildebene der Abbildung für das erste Lichtfeld und/oder das zweite Lichtfeld mindestens 0,1 mm (oder mindestens 0,2 mm, 0,5 mm, 1 mm, 2 mm, 4 mm, oder sogar mindestens 8 mm) von der Position des Detektors ab.

In zumindest einem Ausführungsbeispiel des Verfahrens beinhaltet das Messen des Interferenzmusters das Messen der Phase und der Amplitude (d. h. der Intensität) des Interferenzmusters. Dies kann sowohl für die Messung des gesamten Interferenzmusters als auch für Teil-Interferenzen eines einzigen Ausgangsspot oder eines einzigen Pixels. Neben einer räumlich aufgelösten Messung ist auch eine spektral aufgelöste Messung der Amplitude möglich.

Im Allgemeinen lässt sich ein kohärentes Lichtfeld (E) als Realteil einer komplexwertigen Funktion darstellen:

$$E(x, y, z) = \mathrm{Re}(A(x, y, z) \cdot \exp(i\varphi(x, y, z)). \qquad (7)$$

Hierbei ist A die Amplitude und $\varphi$ die Phase des Lichtfelds. Beide Funktionen sind Funktionen des Ortes (x,y,z). Da das elektrische Feld zudem zeitabhängig ist, ist $\varphi$ nur bis auf eine globale Konstante bestimmt.

Die Phase $\varphi$ kann beispielsweise dann bestimmt (d.h. gemessen) werden, wenn das Lichtfeld räumlich kohärent ist. Das Lichtfeld kann jedoch eine endliche zeitliche Kohärenzlänge haben (sogenannte partielle zeitliche Kohärenz).

Falls das Lichtfeld eine Überlagerung von Strahlenbündeln aus unterschiedlichen voneinander unabhängigen Punktquellen ist, dann ist das Lichtfeld in der Regel räumlich inkohärent. Jeder der Punktquellen kann dann ein Lichtfeld ($E_k$) zugeordnet werden, das entsprechend der obigen Formel (7) dargestellt werden kann, wobei jedem Lichtfeld eine Phase ($\varphi_k$) und eine Amplitude ($A_k$) zugeordnet ist. Die Phasenlage kann für jede der inkohärenten Quellen nur auf eine Konstante bestimmt sein.

Das Interferometer kann es ermöglichen, die Selbstinterferenz von jedem der Strahlenbündel zu messen. Bei der beschriebenen Überlagerung können alle diese Selbstinterferenzen gleichzeitig gemessen werden. Die Selbstinterferenz für jedes Strahlenbündel kann gemessen werden, wenn der optische Pfadunterschied für das jeweilige Strahlenbündel für alle Punkte im Ausgangsspot kleiner als die Kohärenzlänge ist. Das ist insbesondere Fall, wenn für einen Punkt des Ausgangsspots eine näherungsweise Null-Interferenz eingestellt ist und wenn die Variation der Phasendifferenz über den Ausgangsspot im Betrachtungsbereich kleiner als die Kohärenzlänge des detektierten Lichts dividiert durch die Wellenlänge ist. Diese Bedingungen können für alle Strahlenbündel des Ausgangsfelds gleichzeitig erfüllt sein. Wenn diese Bedingungen für alle Strahlenbündel des Ausgangsfelds gleichzeitig erfüllt ist, dann erfüllt das vorliegende Interferometer bezogen auf die Kohärenzlänge des detektieren Lichtfeld die sogenannte "globale Kohärenzbedingung". Ausführungsbeispiele eines hier beschriebenen Interferometers können die globale Kohärenzbedingung erfüllen. Die Kohärenzlänge des verwendeten Lichtfeldes kann kleiner 1 m (oder kleiner 1mm, oder kleiner 100 $\mu$m, oder kleiner 10 $\mu$m oder kleiner 1 $\mu$m) sein.

Es ist möglich, dass der globale Phasenfaktor der inkohärenten Emissionsquelle bei der Selbstinterferenz des ersten und/oder des zweiten Lichtfelds durch das Produkt von des ersten Lichtfelds mit dem konjugiert komplexen des zweiten Lichtfelds kompensiert werden kann. Die Phase des kohärenten Interferenzterms oder die Phase des Entwicklungskoeffizienten in der Zerlegung des komplexen Interferenzterms oder die Phase des komplexen Interferenzterms eines Objekts bestehend aus inkohärenten Punktquellen kann somit eindeutig bestimmt sein. Für den Fall dass für die Messung oder Bestimmung der kohärenten Interferenzterme der Punktquellen und die Messung des komplexen Interferenzterms der Überlagerung oder des Gesamtobjekts die gleiche Einstellung des Interferometers gewählt ist, kann erreicht werden, dass die Entwicklungskoeffizienten der Zerlegung des komplexen Interferenzterms in die Punktbeiträge reell sind, d.h. keinen Imaginärteil haben. Damit kann die Genauigkeit oder Auflösung erheblich gesteigert werden.

Beispielsweise werden bei der Phasenmessung die Phasen bestimmt, bei der Amplitudenmessung die Amplituden, insbesondere die Entwicklungszerlegung des komplexen Interferenzterms. Soweit die unter Umständen komplexe Amplitude des Beitrags eines kohärenten Interferenzterms feststeht, steht damit auch der Beitrag des kohärenten Eingangsfeldes fest, das zu dem kohärenten Interferenzterm gehört. Die Amplitude des Feldes ist damit bestimmt oder kann berechnet werden aus der Amplitude des Entwicklungskoeffizienten. Die globale Phase dieses kohärenten Strahlenbündels kann unbestimmt bleiben. Die relative Phase des zugehörigen Strahlenbündels, sowie die Wellenfront des zugehörigen Strahlenbündels kann bestimmt werden. Entweder wurde der kohärente Interferenzterm berechnet womit das verwendete Eingangsfeld aus dem Rechengang bekannt ist, oder der kohärente Interferenzterm wurde gemessen, womit gemäß den Methoden in der veröffentlichten Patentanmeldung WO 2017/211 665 A1 aus der Kenntnis von der Propagatorabbildung und des komplexen kohärenten Interferenzterms das Eingangsfeld berechnet werden kann. Es kann hierzu im Rahmen der Kalibrierung notwendig sein die Intensitäten des ersten Lichtfelds und des zweiten Lichtfelds aus dem kohärenten Interferenzterm getrennt im Rahmen der Kalibrierung zu messen.

Bei komplizierteren Eingangsfeldern, z.B. Feldern aus optischen Systemen mit Aberrationen, ist der Rechenweg unter Umständen nicht gangbar und es kann erforderlich sein, den tatsächlich vorhandenen kohärenten Interferenzterm oder die komplexe Punktspreizfunktion zu messen. Über das Verfahren in der veröffentlichten Patentanmeldung WO 2017/211 665 A1 kann das komplexe erste Lichtfeld aus den Messdaten, insbesondere aus den kohärenten Interferenzterm, bestimmt werden. Damit können aus den Messdaten, zum Beispiel über elektronisches Fokussieren, weitere komplexe Punktspreizfunktionen für andere axiale Objektabstände generiert werden. Es ist damit möglich über wenige Kalibrierungsschritte (z.B. höchstens 5 Messungen) alle erforderlichen kohärenten Interferenzterme oder komplexe Punktspreizfunktionen zu berechnen. Das beinhaltet insbesondere kohärente Interferenzterme oder komplexe Punktspreizfunktionen für unterschiedliche axiale Objektabstände.

Es ist möglich, dass bei einer Phasen- oder Amplitudenbestimmung eines Eingangsfeldes in einem ersten Schritt der komplexe Interferenzterm bestimmt wird. In einem zweiten Schritt können, z.B. mit dem Auswertemodul, die Anteile der einzelnen Punktquellen oder Strahlenbündel bestimmt werden.

In manchen Ausführungsbeispielen kann ein hier beschriebenes Verfahren für elektronische Fokussierung, Bildkorrektur (insbesondere das Schärfen eines Bildes) und/oder Aberrationskorrektur eines optischen Systems verwendet werden. Hierbei kann als Objekt ein mittels einer anderen Abbildungsvorrichtung abgebildetes Bild dienen. Mittels des Verfahrens kann es somit möglich sein, Bilder nachzubearbeiten.

Manche Ausführungsbeispiele eines hier beschriebenen Verfahrens eignen sich zur Vermessung von Oberflächenstrukturen eines dreidimensionalen Objekts. Ferner ist die Vermessung von Objekten mit zeitlich partiell inkohärenten Lichtquellen und/oder mittels Fotolumineszenz möglich. Hierbei wird mittels des hier beschriebenen Verfahrens eine Unterdrückung des sogenannten Speckle-Rauschens möglich. Weitere Verwendungen von Ausführungsbeispielen eines hier beschriebenen Verfahrens beziehen sich auf die Messung von Phasenobjekten, insbesondere phasensensitive Hellfeld-Messung oder Dunkelfeld-Mikroskopie, und die Lagebestimmung eines Objektes in einem dreidimensionalen Raum, zum Beispiel ein 3D-Profiler.

Allgemein können Ausführungsbeispiele eines hier beschriebenen Verfahrens zur Objektrekonstruktion verwendet werden. Unter Objektrekonstruktion wird der Prozess verstanden, bei dem ein gemessenes Lichtfeld als Superposition von Spots dargestellt wird, wobei für jeden Spot die Intensität, das elektrische Feld, die 3D - Lage einer erzeugenden Punktlichtquelle und/oder eine äquivalente Information (wie z. B. eine Selbstkorrelationsfunktion) bestimmt wurde. Typischerweise ist aus einem konventionellen Intensitätsbild einer Kamera keine Objektrekonstruktion möglich.

Unter der Objektrekonstruktion aus dem komplexen Interferenzterm wird im Allgemeinen die Bestimmung der 3D Lage des Objekts, insbesondere der Punktquellen bzw. Objektpunkte des Objekts, und/oder die Bestimmung der Intensitäten der Objektpunkte des Objekts verstanden.

In zumindest manchen Ausführungsbeispielen wird das Verfahren zur Bildkorrektur und/oder zur elektronischen Fokussierung eines Bildes verwendet. Das zu korrigierende Bild wurde mit einer Abbildungsvorrichtung, die nicht Teil des für das Verfahren verwendeten Interferometers ist, abgebildet und aufgenommen. Das zu korrigierende Bild wurde nahe einem Fokus der Abbildungsvorrichtung, jedoch nicht im Fokus der Abbildungsvorrichtung, aufgenommen. Es kann somit möglich sein, ein leicht defokussiertes Bild nach zu fokussieren.

Im Allgemeinen kann "nahe dem Fokus" wie folgt aufgefasst werden: das gesamte optische System besteht aus einer Abbildungsvorrichtung, die nicht Teil des offenbarten Interferometers ist und einem Interferometer gemäß Offenbarung mit einem Detektor in der Detektionsebene. Das zu korrigierende Bild geht beispielsweise aus einem Objekt (oder einem Objektpunkt) hervor, das mittels der Abbildungsvorrichtung abgebildet wurde, wobei der durch die Abbildung erzeugte Spot mittels des Detektors der Abbildungsvorrichtung aufgenommen wurde. Ein Spot auf einem Detektor der Abbildungsvorrichtung entspricht näherungsweise einer fokalen Lage (befindet sich also "nahe dem Fokus"), wenn die Ebene des Detektors näherungsweise eine konjugierte Ebene zu der Ebene des Objekts ist. Beispielsweise kann die Position des Objekts beim Abbilden mit der Abbildungsvorrichtung wenigstens 1 $\mu$m (oder wenigstens 5 $\mu$m oder wenigstens 10 $\mu$m) und/oder höchstens 100 $\mu$m (oder höchstens 50 $\mu$m, oder höchstens 20 $\mu$m) von einer Position des Fokus der Abbildungsvorrichtung abweichen.

"Nahe dem Fokus" kann beispielsweise wie folgt verstanden werden. Das Ausgangsfeld des Interferometers beinhaltet z.B. die Überlagerung des ersten Lichtfelds und des zweiten Lichtfelds. Aufgrund der Defokussierungseinheit sind die fokalen Lagen für diese beiden Lichtfelder axial unterschiedlich, weshalb die Fokus-Bedingung für diese beiden Lichtfelder nicht gleichzeitig erfüllt sein kann. Die Bedingung "nahe dem Fokus" kann wie folgt präzisiert werden: ein Spot des ersten Lichtfelds und/oder des zweiten Lichtfelds kann am Detektor jeweils einen Spotdurchmesser von höchstens dem Doppelten (oder höchstens dem 5-Fachen, 10-Fachen, 20-Fachen, 50-Fachen, 100-Fachen oder 500-Fachen) eines minimal möglichen Durchmessers des Spots (unter Berücksichtigung der ggf. vorhandenen Aberrationen) aufweisen. Der Spotdurchmesser des ersten Lichtfelds (zweiten Lichtfelds) kann jeweils bei geblocktem zweiten Interferometerarm (ersten Interferometerarm) gemessen werden. Der minimal mögliche Durchmesser des Spots ist insbesondere durch die Abbildungsvorrichtung gegeben und kann beispielsweise mittels einer Punktspreizfunktion der Abbildungsvorrichtung ermittelt werden.

Alternativ oder zusätzlich kann die Position des Spots des ersten Lichtfelds und/oder des zweiten Lichtfelds und/oder die Position des Selbstinterferenzterms auf dem Detektor um wenigstens 1 $\mu$m (oder wenigstens 10 $\mu$m, 100 $\mu$m, 1 mm, 2 mm, 4 mm, 8 mm oder 16 mm) von der Fokusebene des ersten Lichtfelds bzw. des zweiten Lichtfelds abweichen, wobei von den Abständen das erste Lichtfeld und das zweite Lichtfeld jeweils nur der größere Abstand genommen wird. Bei der Anwendung der Abbildungsoptik auf das Interferometer muss daher nicht auf eine bestimmte Detektionsebene "scharf" gestellt werden. Es reicht eine näherungsweise Fokussierung.

In manchen Ausführungsbeispielen kann die Verwendung eines hier beschriebenen Verfahrens eine Dekonvolution eines Bildes und einer Punktspreizfunktion umfassen. Das Bild kann als komplexer Interferenzterm gemessen und/oder dargestellt worden sein.

Gemäß mancher Ausführungsbeispiele umfasst ein Interferometer zur Bestimmung einer Eingangsphase und/oder einer Eingangsamplitude eines Eingangslichtfelds eine Teilungsvorrichtung, eine Abbildungsvorrichtung und einen Detektor.

Die Teilungsvorrichtung definiert einen ersten Interferometerarm und einen zweiten Interferometerarm, wobei der zweite Interferometerarm eine Defokussierungseinheit aufweist. Der erste Interferometerarm kann optional ebenfalls eine Defokussierungseinheit aufweisen. Die Teilungsvorrichtung kann mehrere Optiken (wie abbildende und/oder umlenkende Optiken) umfassen. Der erste Interferometerarm und der zweite Interferometerarm werden beispielsweise durch optische Ein- und/oder Ausgänge der Teilungsvorrichtung definiert. Die Teilungsvorrichtung kann ausschließlich einen einzelnen Amplitudenteiler (z. B. einen Strahlteiler und/oder einen Polarisator) aufweisen oder mehrere oder wenigstens einen Amplitudenteiler (z. B. einen Strahlteiler und/oder einen Polarisator) am Anfang der Interferometerarme und einen Amplitudenüberlagerer (z. B. einen Strahlteiler und/oder einen Polarisator) am Ende der beiden Interferometerarme. Die Interferometerarme können räumlich getrennt voneinander verlaufen oder überlagert sein, z. B. ähnlich zu dem Aufbau eines Michelson-Interferometers.

Die Teilungsvorrichtung ist dazu eingerichtet, das Eingangslichtfeld mittels Amplitudenteilung in ein erstes Lichtfeld und ein zweites Lichtfeld aufzuteilen. Hierfür kann die Teilungsvorrichtung einen Amplitudenteiler aufweisen.

Die Teilungsvorrichtung und die Abbildungsvorrichtung sind dazu eingerichtet und justiert, das entlang des ersten Interferometerarms propagierte erste Lichtfeld und das entlang des zweiten Interferometerarms propagierte zweite Lichtfeld derart mittels Amplitudenüberlagerung zu überlagern und derart auf den Detektor abzubilden, dass jeweils ein erster Spot des ersten Lichtfelds und jeweils ein zweiter Spot des zweiten Lichtfelds an dem Detektor zu einem gemeinsamen Ausgangsspot eines Ausgangslichtfelds interferieren und das Ausgangslichtfeld an dem Detektor ein Interferenzmuster erzeugt. Beispielsweise kann die Teilungsvorrichtung hierfür einen Amplitudenüberlagerer aufweisen, der sich von dem Amplitudenteiler unterscheiden kann oder mit diesem identisch sein kann. Ferner ist es möglich, dass der erste und der zweite Interferometerarm und/oder die Teilungsvorrichtung weitere Optiken, wie beispielsweise Spiegel, beinhalten. Ferner kann die Abbildungsvorrichtung eine abbildende Optik, wie beispielsweise eine Linse, aufweisen.

Der Detektor ist dazu eingerichtet, zumindest einen Teil des Interferenzmusters zu messen. Die Defokussierungseinheit ist dazu eingerichtet, das entlang dem zweiten Interferometerarm propagierende zweite Lichtfeld relativ zu dem ersten Lichtfeld zu defokussieren. Die Defokussierung kann beispielsweise eine axiale Verschiebung des zweiten Lichtfelds relativ zu dem ersten Lichtfeld beinhalten. Axial ist hierbei auf die Ausbreitungsrichtung eines Strahlenbündels aus dem Lichtfeld bezogen, typischerweise der Zentralstrahl. Optional kann eine in dem ersten Interferometerarm vorhandene weitere Defokussierungseinheit das erste Lichtfeld ebenfalls defokussieren.

Die Defokussierungseinheit, die Teilungsvorrichtung, die Abbildungsvorrichtung und der Detektor sind derart eingerichtet und justiert, dass der Ausgangsspot auf eine Vielzahl von Spotpixeln trifft, wobei für wenigstens 10% der Spotpixel im Betrachtungsbereich es eine Variation des Phasenunterschieds zwischen dem ersten Lichtfeld und dem zweiten Lichtfeld am Ort der Spotpixel um mehr als $0,1\,\pi$ (oder um mehr als $0,5\,\pi$ oder um mehr als $\pi$) variiert, wobei die Phase stetig fortgesetzt sind, d.h. $2\pi$-Phasensprünge ausgenommen sind. Alternativ oder zusätzlich ist es möglich, dass die Defokussierungseinheit, die Teilungsvorrichtung, die Abbildungsvorrichtung und der Detektor derart eingerichtet und justiert sind, dass der Ausgangsspot auf eine Vielzahl von Spotpixeln trifft, wobei für wenigstens 10% der Spotpixel ein Phasenunterschied zwischen dem ersten Lichtfeld und dem zweiten Lichtfeld am Ort der Spotpixel um ungleich $2\,k\cdot\pi$ ($k=..-2,-1,0,1,2,...$) variiert. Mit anderen Worten: für zumindest 10% der Spotpixel existiert in dem Interferenzmuster des Ausgangsspots zeitgleich ein Realteil und ein Imaginärteil, sodass eine Interferenz möglich ist. Die Phasenvariation kann ein Ergebnis der Defokussierung sein. Der Zentralstrahl kann hierbei eine Null-Interferenz oder näherungsweise Null-Interferenz aufweisen, bzw. wird IF dementsprechend in der Phase adjustiert. Beispielsweise hält zumindest eine der obigen Bedingungen für mindestens 10% (oder mindestens 20% oder sogar mindestens 50%) der Spotpixel.

In manchen Ausführungsbeispielen des Interferometers weist die Defokussierungseinheit zumindest eine der folgenden Komponenten auf oder besteht aus einer der folgenden Komponenten: ein dielektrisches Medium, insbesondere eine dielektrische Platte; ein refraktives System, insbesondere eine Linse; ein diffraktives System mit einer Translationssymmetrie, insbesondere ein Gitter; ein verstellbarer Spiegel, insbesondere ein Piezo-verstellbarer Spiegel. Das dielektrische Medium kann einen verstellbaren Brechungsindex aufweisen und/oder es kann so gedreht werden, dass das Lichtfeld es unter einem Winkel durchläuft und abhängig von Durchtrittswinkel einen unterschiedlich langen Weg im Dielektrikum durchläuft.

In manchen Ausführungsbeispielen sind die Defokussierungseinheit, die Teilungsvorrichtung, die Abbildungsvorrichtung und der Detektor derart eingerichtet und justiert, dass das Ausgangslichtfeld wenigstens drei Ausgangsspots aufweist. Die drei Ausgangsspots können auf unterschiedliche Bereiche des Detektors abgebildet werden. Für die wenigstens drei Ausgangsspots gilt

das Ausgangslichtfeld ist an unterschiedlichen Ausgangsspots der wenigstens drei Ausgangsspots frei von einer gegenseitigen Kohärenz und

das Ausgangslichtfeld weist innerhalb eines Ausgangsspots der wenigstens drei Ausgangsspots zumindest partielle räumliche Kohärenz auf.

Die Bedingungen (i) und (ii) wurden bereits im Zusammenhang mit Ausführungsbeispielen des Verfahrens erläutert.

Die Defokussierungseinheit, die Teilungsvorrichtung, die Abbildungsvorrichtung und der Detektor können ferner derart eingerichtet und justiert sein, dass der jeweils erste Spot des ersten Lichtfelds und der jeweils zweite Spot des zweiten Lichtfelds, die zu einem gemeinsamen Ausgangsspot des Ausgangslichtfelds interferieren, aus demselben Eingangsspot des Eingangslichtfelds hervorgehen.

In manchen Ausführungsbeispielen des Interferometers ist die Defokussierungseinheit oder eine andere Vorrichtung, wie ein Piezo-verstellbarer Spiegel oder ein Phasenschieber dazu eingerichtet, die optische Pfadlänge des zweiten Interferometerarms zu verändern. Beispielsweise wird die optische Pfadlänge des zweiten Interferometerarms relativ zu der optischen Pfadlänge des ersten Interferometerarms verändert.

In manchen Ausführungsbeispielen des Interferometers unterscheidet sich die geometrische Propagationsstrecke des zweiten Interferometerarms um wenigstens 0,1 mm, (oder wenigstens 0,2 mm, 0,5 mm , 1 mm, 3 mm, 5 mm, oder sogar wenigstens 10 mm) von der geometrischen Propagationsstrecke des ersten Interferometerarms. Beispielsweise ist die geometrische Propagationsstrecke des zweiten Interferometerarms länger als die geometrische Propagationsstrecke des ersten Interferometerarms.

Alternativ oder zusätzlich ist es möglich, dass sich die optische Pfadlänge des ersten Interferometerarms von der optischen Pfadlänge des zweiten Interferometerarms näherungsweise nicht unterscheidet. Dies kann bedeuten, dass es einen Punkt auf dem Detektor mit näherungsweiser Null-Interferenz gibt.

Die geometrische Propagationsstrecke ist die geometrische Länge des Pfades, entlang dessen die Propagation erfolgt. Die geometrische Propagationsstrecke ist gegenüber der metrischen Länge um den Abstand der Hauptebenen reduziert. Entlang der geometrischen Propagationsstrecke erfolgt die Abbildung gemäß geometrischer Optik.

Propagation bezeichnet im Allgemeinen die Ausbreitung des Lichtfelds, also die Weiterentwicklung und/oder Ausbreitung eines Lichtfeldes von einer Ausgangsebene zu einer Endebene. Zur physikalischen Modellierung des Vorgangs kann z.B. das Kirchhoff'sche Beugungsintegral verwendet werden und/oder eine Lösung der Helmholtz Gleichung. Alternativ kann die Propagation nach den Regeln der geometrischen Optik oder durch sogenanntes Ray-Tracing berechnet werden. Die geometrische Pfadlänge in einem dielektrischen Medium, durch das ein Lichtfeld propagiert, kann der Quotient der metrischen Pfadlänge des Mediums und des mittleren Brechungsindexes des Mediums sein. Die geometrische Pfadlänge berücksichtigt Hauptebeneneffekte. Die geometrische Pfadlänge kann der metrischen Länge des Mediums entlang der Ausbreitungsrichtung entsprechen, reduziert um die Bereiche zwischen den Hauptebenen.

Gemäß zumindest eines Ausführungsbeispiels des Interferometers ist das Interferometer derart eingerichtet, dass das Interferenzmuster eine Überlagerung mehrerer Spotinterferenzmuster der Ausgangsspots ist. Der Detektor ist eingerichtet, die Phase und die Amplitude der Spotinterferenzmuster und/oder des Interferenzmusters zu messen.

Gemäß zumindest eines Ausführungsbeispiels des Interferometers ist die Teilungsvorrichtung dazu eingerichtet und justiert, das Eingangslichtfeld mittels Amplitudenteilung aufzuteilen und das propagierte erste Lichtfeld und das propagierte zweite Lichtfeld mittels Amplitudenüberlagerung zu überlagern. Beispielsweise beinhaltet die Teilungsvorrichtung zumindest einen Strahlteiler.

In manchen Ausführungsbeispielen umfasst eine Signalverarbeitungsvorrichtung zur Bestimmung einer Eingangsphase und/oder einer Eingangsamplitude eines Eingangslichtfelds ein Eingangsmodul, ein Speichermodul und ein Auswertemodul. Das Eingangsmodul ist dazu eingerichtet, aus einem Signal, das von einem Detektor stammt, einen komplexen Interferenzterm zu ermitteln.

Das Speichermodul umfasst eine Propagatorabbildung und/oder eine Punktspreizfunktion, wobei die Propagatorabbildung eine Propagation eines entlang einer optischen Pfadlänge propagierten ersten Lichtfeldes in ein entlang der optischen Pfadlänge propagiertes zweites Lichtfeld beschreibt, wobei das propagierte zweite Lichtfeld relativ zu dem propagierten ersten Lichtfeld defokussiert ist. Bei der Propagatorabbildung kann es sich insbesondere um eine Punktspreizfunktion handeln, welche die besagte Propagation beschreibt. Die Punktspreizfunktion kann der Propagatorabbildung entsprechen.

Das Auswertemodul ist dazu eingerichtet, aus dem komplexen Interferenzterm und der Propagatorabbildung und/oder der Punktspreizfunktion die Eingangsphase und/oder die Eingangsamplitude des Eingangslichtfelds zu bestimmen. Hierfür kann das Auswertemodul neben dem komplexen Interferenzterm eine Referenzdatenbank nutzen.

Bei der Signalverarbeitungsvorrichtung kann es sich insbesondere um einen Computer handeln, der entsprechende Ein- und Ausgänge zur Kommunikation mit dem Detektor aufweist.

In manchen Ausführungsbeispielen umfasst das Speichermodul eine Referenzdatenbank, wobei die Referenzdatenbank komplexe Vergleichsinterferenzterme umfasst, wobei die komplexen Vergleichsinterferenzterme mittels Berechnung und/oder Kalibration ermittelt wurden und wobei das Auswertemodul dazu eingerichtet ist, aus dem Signal mittels Vergleich mit den komplexen Vergleichsinterferenztermen den komplexen Interferenzterm zu ermitteln. Die Vergleichsinterferenzterme können beispielsweise Punktspreizfunktionen sein. Die Ermittlung des komplexen Interferenzterms kann ein Ermitteln von anteiligen Beiträgen unterschiedlicher Punktspreizfunktionen zum komplexen Interferenzterm beinhalten.

Ein mögliches Verfahren zur Bestimmung der Zerlegung des komplexen Interferenzterms in die anteiligen Beiträge unterschiedlicher Punktspreizfunktionen ist eine Darstellung als eine Faltung zwischen einer vorerst unbekannten Amplitude für die Spotlage und einer komplexen Punktspreizfunktion (oder einem komplexen Spotinterferenzterm). Die Faltung entspricht im Fourierraum einer Multiplikation. D.h. durch Darstellung des Problems im Fourierraum kann aus dem Quotienten der Fouriertransformierten des komplexen Interferenzterms und der Fouriertransformierten der komplexen Punktspreizfunktion die Fouriertransformierte der vorerst unbekannten Amplitude bestimmt werden. Durch Fouriertransformation kann die ursprünglich gesuchte Amplitudenfunktion bestimmt werden. Das Verfahren setzt voraus., dass alle Punktspreizfunktionen durch laterale Translation aus einer Referenz Punktspreizfunktion erzeugt werden können. Dies ist näherungsweise der Fall, wenn alle Objektpunkte in der gleichen Ebene liegen. Anderenfalls ist es notwendig für verschiedene Bildteile unterschiedliche Rückfaltungen zu verwenden oder überhaupt ein anderes Verfahren zu verwenden. Allgemein besteht die Lösungsaufgabe aus der Lösung einer linearen Gleichung, die auch ohne Bezug auf eine Faltung lösbar ist.

Es wird ferner ein Computerprogramm angegeben. Das Computerprogramm ist dazu eingerichtet, aus einem Signal, das von einem Detektor stammt, einen komplexen Interferenzterm zu ermitteln. Ferner ist das Computerprogramm dazu eingerichtet, aus dem komplexen Interferenzterm und einer Propagatorabbildung und/oder einer Punktspreizfunktion die Eingangsphase und/oder die Eingangsamplitude des Eingangslichtfelds zu bestimmen.

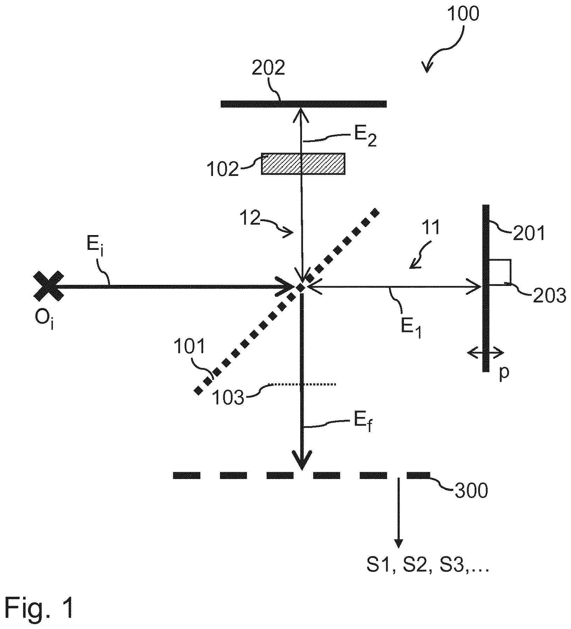

Die Figur 1 zeigt schematisch ein Interferometer 100 gemäß eines Ausführungsbeispiels. Der in Figur 1 dargestellte Aufbau ist ähnlich dem eines Michelson-Interferometers. Das Interferometer 100 weist eine Teilungsvorrichtung 101 auf, die vorliegend sowohl als Amplitudenteiler als auch als Amplitudenüberlagerer fungiert. Die Teilungsvorrichtung 101 ist in dem gezeigten Ausführungsbeispiel ein Strahlteiler. Ein von einem Objekt Oi ausgehendes Eingangslichtfeld Ei kann unter Verwendung der Teilungsvorrichtung 101 mittels Amplitudenteilung in ein erstes Lichtfeld E1 und ein zweites Lichtfeld E2 aufgeteilt werden. Das erste Lichtfeld E1 propagiert anschließend entlang eines ersten Interferometerarms 11 und das zweite Lichtfeld E2 propagiert entlang eines zweiten Interferometerarms 12. Nach der Propagation können die beiden Lichtfelder E1, E2 mittels Amplitudenüberlagerung an der Teilungsvorrichtung 101 zu einem Ausgangslichtfeld Ef überlagert werden.

Der erste Interferometerarm 11 beinhaltet einen ersten Spiegel 201, der mittels eines Piezoelements 203 um eine Verschiebung p entlang der Propagationsrichtung des ersten Lichtfelds E1 verschoben werden kann. Der erste Spiegel 201 und das Piezoelement 203 wirken somit gemeinsam als Phasenschieber. Die optische Pfadlänge des ersten Interferometerarms 11 wird derart verändert, dass die optische Pfadlänge des ersten Interferometerarms 11 der optischen Pfadlänge des zweiten Interferometerarms 12 entspricht. Über das Piezoelement 203 ist es möglich den optische Pfadlängenunterschied auf eine Null-Interferenz für einen ausgewählten Punkt eines ausgewählten Strahlenbündels zu stabilisieren. Für das oben genannte "phase shifting" wird die optische Pfadlänge zum Beispiel um diverse Werte im Bereich 0 bis $2\pi$ variiert.

Der zweite Interferometerarm 12 beinhaltet einen zweiten Spiegel 202 und eine Defokussierungseinheit 102. Bei der Defokussierungseinheit 102 handelt es sich in dem gezeigten Beispiel um eine dielektrische Platte mit einem Brechungsindex (n), der größer ist als der Brechungsindex des umgebenden Mediums (bspw. Luft). Mittels der dielektrischen Platte kann die optische Pfadlänge des zweiten Interferometerarms 12 verlängert werden und die geometrische Pfadlänge des zweiten Interferometerarms 12 kann verkürzt werden.

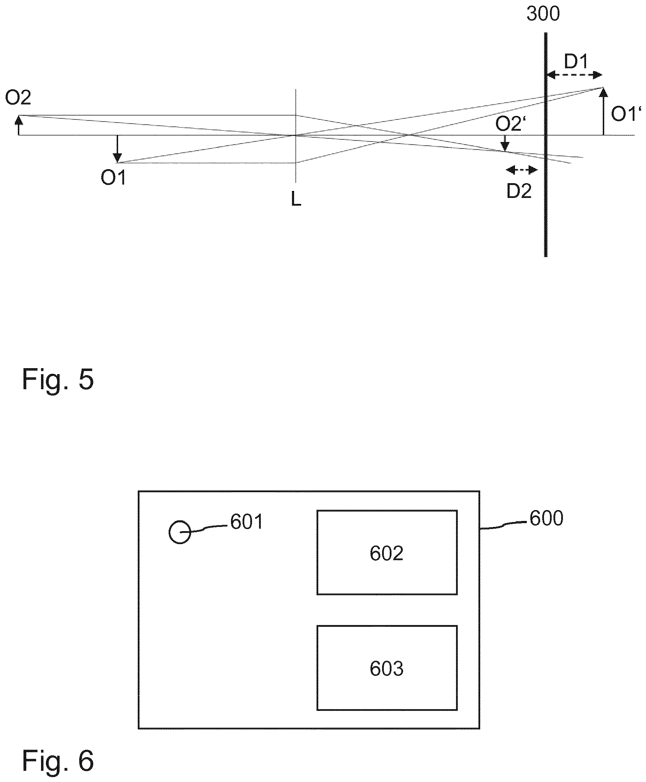

Das erste Lichtfeld E1 und das zweite Lichtfeld E2 werden nach Durchlaufen des ersten Interferometerarms 11 bzw. des zweiten Interferometerarms 12 mittels der Teilungsvorrichtung 101 zu einem Ausgangslichtfeld Ef überlagert und auf einem Detektor 300 zur Interferenz gebracht. Bei dem Detektor 300 kann es sich beispielsweise um einen CCD-Sensor handeln. Das Ausgangslichtfeld Ef kann hierbei mittels einer optionalen Abbildungsvorrichtung 103 auf den Detektor 300 abgebildet werden. Rein exemplarisch ist die Abbildungsvorrichtung 103 zwischen der Teilungsvorrichtung 101 und dem Detektor 300 eingebracht. Es ist jedoch möglich, die Abbildungsvorrichtung 103 in einem der beiden Interferometerarme 11, 12 zu platzieren. Dann wirkt die Abbildungsvorrichtung 103 nur auf das Feld E1 oder E2. Die Abbildungsvorrichtung 103 kann eine Linse (z.B. ein Mikrolinsenarray) sein. Es ist aber auch möglich, dass die Abbildungsvorrichtung 103 lediglich eine Propagation des Ausgangslichtfelds Ef erzeugt und/oder das Ausgangslichtfeld Ef auf den Detektor 300 umlenkt. Mittels des Detektors 300 wird das Interferenzmuster gemessen und ein Eingangssignal S1, S2, S3 für eine optionale Auswertevorrichtung (auch: Signalverarbeitungsvorrichtung, vgl. z.B. Figur 6) bereitgestellt.

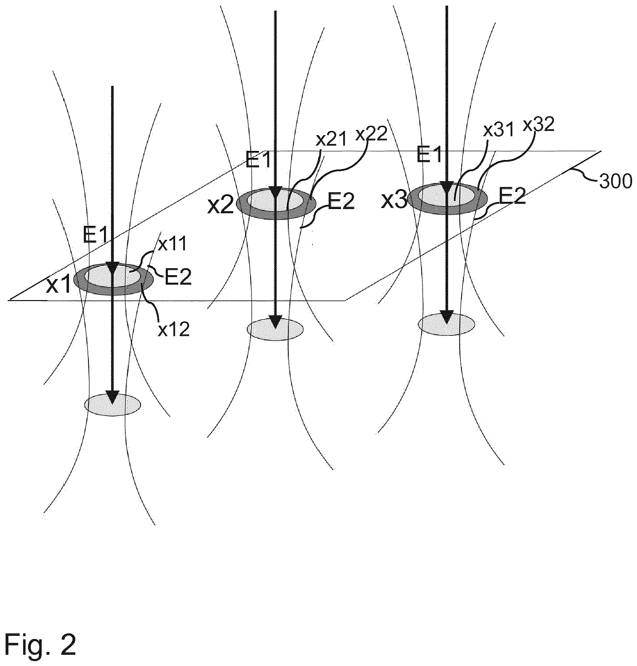

Durch den in der Figur 1 gezeigten Aufbau des Interferometers 100 kann ein erster Spot des ersten Lichtfelds E1 mit einem zweiten Spot des zweiten Lichtfelds E2 zur Interferenz gebracht werden (vgl. hierzu auch Figur 2).

Die Figur 2 zeigt schematisch die Interferenz dreier Spots x1, x2, x3 des Ausgangslichtfelds Ef auf dem Detektor 300. Die Wahl der Anzahl der gezeigten Spots x1, x2, x3 ist rein exemplarisch - es sind auch vier und mehr Spots möglich. Jeder der drei Spots x1, x2, x3 ist aus einer Interferenz eines ersten Spots x11, x21, x31 des ersten Lichtfelds E1 und eines zweiten Spots x12, x22, x32 des zweiten Lichtfelds E2 gebildet. Rein exemplarisch wird jeder Spot x11, x12, x21, x22, x31, x32 als Gauß'sches bzw. Gauß-ähnliches Strahlenbündel dargestellt, wobei der Bereich des kleinsten Stahldurchmessers der optimalen Fokussierung entspricht.

Wie in der Figur 2 dargestellt, sind die Spots x11, x12, x21, x22, x31, x32 der beiden Lichtfelder E1, E2 axial zueinander verschoben - das zweite Lichtfeld E2 ist also im Vergleich zum ersten Lichtfeld E1 defokussiert. Im Ergebnis kommt jeder Spot x11, x12, x21, x22, x31, x32 des ersten Lichtfelds E1 und/oder des zweiten Lichtfelds E2 quasi mit einer Replikation seiner selbst, jedoch mit einer anderen fokalen Lage, zur Interferenz. Es wird also quasi eine Interferenz zweier Strahlenbündel, die miteinander selbst kohärent sind, erzeugt.

Für keines der beiden Lichtfelder E1, E2 wird notwendigerweise eine Fokusbedingung auf dem Detektor 300 erfüllt. Das heißt, es ist nicht erforderlich, dass die Spots des ersten Lichtfelds E1 und/oder des zweiten Lichtfelds E2 den Detektor 300 im Fokus treffen. Beide Lichtfelder E1, E2 können am Detektor 300 "außer Fokus" sein. Sie haben jedoch in der Regel die gleiche optische Pfadlänge durchlaufen, d.h. auch bei kurzer zeitlicher Kohärenz und/oder kurzer optischer Kohärenzlänge (bspw. bei sogenanntem inkohärentem Licht') kommen die beiden Strahlen zur Interferenz. Die Bedingung der Überlagerung und der Interferenz kann für alle Strahlenbündel (die z.B. zueinander räumlich inkohärent sind) gleichzeitig erfüllt sein.

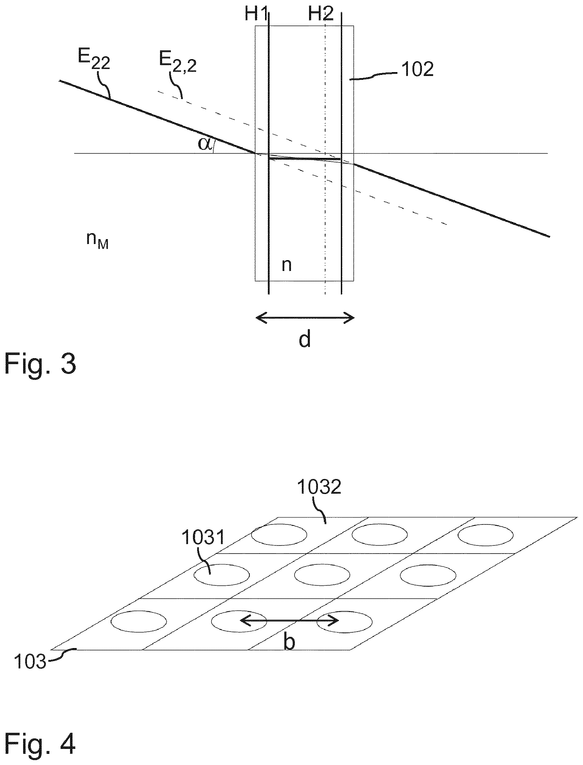

Anhand der schematischen Darstellung der Figur 3 wird eine geometrische Methode zur Konstruktion von Hauptebenen erläutert. Gezeigt ist eine als planparallele dielektrische Platte mit einer Dicke d und einem Brechungsindex n ausgeführte Defokussierungseinheit 102 sowie deren Hauptebenen H1, H2. Ferner sind rein beispielhaft die Strahlengänge zweier Lichtstrahlen E21, E22 des zweiten Lichtfelds E2 durch die Defokussierungseinheit 102 gezeigt.

Das System ist ein telezentrisches System bei dem für einen Brechungsindex $n > n_M$ die Hauptebenen H1, H2 in das Innere der planparallelen Platte gerückt sind. $n_M$ ist hierbei der Brechungsindex des umgebenden Mediums, welcher im Folgenden rein beispielhaft gleich 1 gesetzt wird (Brechungsindex von Luft), wobei auch andere Medien möglich sind.

Die optische Pfadlänge wird durch das Einbringen der Defokussierungseinheit 102 um den Wert (n-1)*d verlängert. Der Abstand der beiden Hauptebenen beträgt (1-1/n)*d. Während die optische Pfadlänge durch das dielektrische Medium verlängert wird, wird die geometrische Propagationsstrecke um den Abstand der beiden Hauptebenen verkürzt.

Im Gegensatz hierzu würde eine reine Verlängerung der Pfadlänge in dem Medium - also ohne das Einbringen einer dielektrischen Platte - um die Dicke d zwar ebenfalls zur Verlängerung der geometrischen Pfadlänge führen, jedoch wäre hierbei auch die optische Propagationsstrecke verlängert. Bei einem inkohärentem Lichtfeld führt dies dazu, dass keine Interferenzen gemessen werden können, soweit die Pfadlängenverlängerung größer als die Kohärenzlänge ist. Kohärenzlängen für Felder betrachtet in dieser Offenbarung können im Bereich von wenigen μm sein, d.h. die Defokussierungseinheit kann über eine reine Verlängerung der Pfadlänge nicht funktionieren.

Für eine exemplarische Dicke der dielektrischen Platte von 1 mm, ausgeführt in bspw. BK7 Glas, ergibt sich im sichtbaren Bereich eine nennenswerte chromatische Aberration. Die Abbe-Zahl von BK7 liegt bei 64,2 und für eine Linienbreite von 30 nm bei einer Zentralwellenlänge von 630 nm ergibt sich ein optischer Pfadunterschied über die Linienbreite von 0,5 μm (4 rad). Die Linienbreite entspricht der theoretischen Linienbreite einer Leuchtdiode (LED). Damit ist ein LED-Lichtfeld für eine derart ausgeführtes Interferometer nicht geeignet für eine Messung der Interferenzen.

Eine chromatische Korrektur kann ermöglicht werden indem in beiden Interferometerarmen 11, 12 (z.B. in dem Ausführungsbeispiel der Figur 1) jeweils zumindest eine Defokussierungseinheit 102 installiert wird (in den Figuren nicht gezeigt). Jede der Defokussierungseinheiten 102 kann eine dielektrische Platte, die zur Dispersionsjustage drehbar ausgebildet sein kann, umfassen. Falls je eine Defokussierungseinheit 102 in jedem Interferometerarmen 11, 12 installiert ist, kann die Defokussierungseinheit 102 für den ersten Interferometerarm 11 mit einem anderen Dielektrikum ausgeführt sein als die Defokussierungseinheit 102 in dem zweiten Interferometerarm 12. Beispielsweise kann in dem zweiten Interferometerarm 12 BK7 Glas (Dicke d2, Brechungsindex n2) und im ersten Interferometerarm 11 CaF$_2$ Glas (Dicke d1, Brechungsindex n1) mit einer Abbe Zahl von ca. 95 zum Einsatz kommen. Die Dicke der beiden dielektrischen Platten wird zum Beispiel so gewählt, dass der Term n1(λ) * d1- n2(λ) * d2 näherungsweise konstant ist. Hieraus ergibt sich ein vorgegebenes Dickenverhältnis d1 / d2. Aufgrund der unterschiedlichen geometrischen Pfadlängen ergibt sich ein Netto-Effekt, der einer chromatisch korrigierten Defokussierungseinheit 102 entspricht.

Die Figur 4 zeigt rein exemplarisch eine als Mikrolinsenarray ausgeführte Abbildungsvorrichtung 103. Die Abbildungsvorrichtung 103 umfasst eine Vielzahl von Linsen 1031, die mittels eines Arraymaterials 1032 miteinander in einem Gitterabstand b verbunden sind. Mittels eines Mikrolinsenarrays ist es beispielsweise möglich, die Interferenzsituation für ein gerastertes Gitter von Bildpunkten zu verändern.

Die Figur 5 zeigt rein exemplarisch für einen einfachen optischen Aufbau, wie die Lage verschiedener Objektpunkte O1, O2 zu unterschiedlichen Strahlenbündeln auf dem Detektor führt, und wie die unterschiedlichen axialen Lagen zu verschiedenen fokalen Lagen des jeweiligen Strahlenbündels relativ zum Detektor führt. Gezeigt ist die Situation für einen ersten Objektpunkt O1 und einen zweiten Objektpunkt O2. Der erste Objektpunkt O1 und der zweite Objektpunkt O2 werden mit einer Linse L auf einen ersten Bildpunkt O1' bzw. einen zweiten Bildpunkt O2' abgebildet. Die unterschiedliche axiale Lage der beiden Objektpunkte O1, O2 führt zu einem Defokus D1, D2 der Bilder relativ zur Bildebene (erster Defokus D1 und zweiter Defokus D2). Gezeigt ist aus Gründen der Übersichtlichkeit nur die Situation für einen Interferometerarm, d.h. zum Beispiel für den ersten Interferometerarm. Die Umlenkungen im Interferometer sind ebenfalls nicht gezeichnet. D.h. das Schema entspricht einem Tunnel Diagramm mit entfalteten Strahlengängen. Die Situation für den zweiten Interferometerarm ist analog, allerdings sind aufgrund der Defokussierungseinheit die Lage der Foki anders. Dies wird von der Auswerteeinheit berücksichtigt, wobei die Grundlage der Auswertung der komplexe Interferenzterm ist. Ein hier beschriebenes Interferometer erlaubt es, die axiale Lage der beiden Bildpunkte O1', O2' aufzulösen und trotz Defokus D1, D2 die laterale Auflösung auf dem Wert eines fokussierten Bildes zu erhalten. Aufgrund des unterschiedlichen Abstandes der Punkte O1 und O2 haben die Punkte O1 und O2 unterschiedliche Punktspreizfunktionen. Der Unterschied der Punktspreizfunktionen, bzw. der zugehörigen kohärenten Eingangs Strahlenbündel, erlaubt einen Rückschluss auf die 3D Lage des ersten Objektpunkts O1 und des zweiten Objektpunkts O2. Die Messung der Lage der Spots kann somit einen Rückschluss auf die Lage der Emissionsquellen erlauben.

Würde das Bild in konventioneller Weise nur in der Intensität aufgenommen, so würde die laterale Auflösung nur dann optimal sein, wenn das Bild auch im Fokus liegt. Andernfalls würde das Bild (zusammengesetzt aus den Bildpunkte O1', O2') durch den Defokus D1, D2 verschmiert sein, und auch durch numerische Nachbereitung könne die Information des optimalen fokussierten Bildes nicht mehr wiedergewonnen werden.

Die Figur 6 zeigt eine schematische Darstellung einer hier beschriebenen Signalverarbeitungsvorrichtung 600 zur Bestimmung einer Eingangsphase und/oder einer Eingangsamplitude eines Eingangslichtfelds Ei. Die Signalverarbeitungsvorrichtung 600 umfasst ein Eingangsmodul 601 das dazu eingerichtet ist, aus einem von einem Detektor 300 stammenden Signal S1, S2, S3 einen komplexen Interferenzterm zu ermitteln. Ferner umfasst die Signalverarbeitungsvorrichtung 600 ein Speichermodul 602 umfassend eine Propagatorabbildung und/oder eine Punktspreizfunktion. "Umfassen" kann in diesem Zusammenhang bedeuten, dass die Propagatorabbildung und/oder die Punktspreizfunktion in dem Speichermodul 602 gespeichert sind. Insbesondere kann das Speichermodul 602 eine Bibliothek mehrerer, unterschiedlicher Punktspreizfunktionen für unterschiedliche Abstände der Objektpunkte umfassen. Die Propagatorabbildung beschreibt eine Propagation eines entlang einer optischen Pfadlänge propagierten ersten Lichtfeldes E1 in ein entlang der optischen Pfadlänge propagiertes zweites Lichtfeld E2, wobei das propagierte zweite Lichtfeld E2 relativ zu dem propagierten ersten Lichtfeld defokussiert ist. Die Signalverarbeitungsvorrichtung 600 umfasst zudem ein Auswertemodul 603 das dazu eingerichtet ist, aus dem komplexen Interferenzterm und der Propagatorabbildung und/oder der Punktspreizfunktion die Eingangsphase und/oder die Eingangsamplitude des Eingangslichtfelds Ei zu bestimmen.

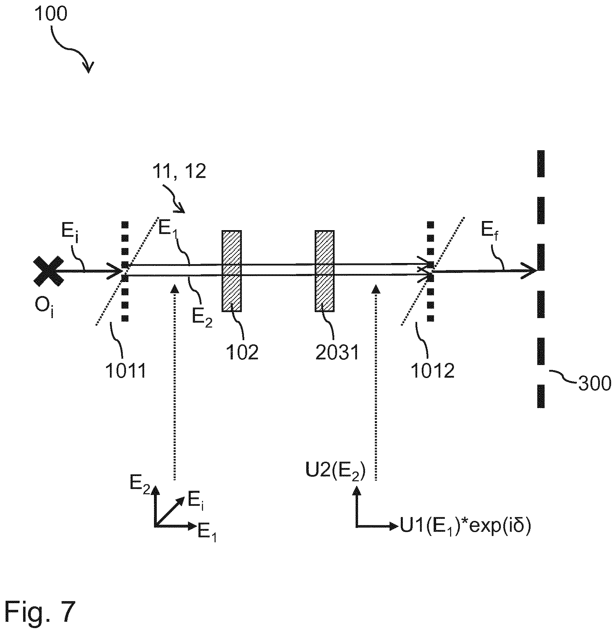

Anhand der schematischen Darstellung der Figur 7 wird ein weiteres Ausführungsbeispiel eines hier beschriebenen Interferometers sowie eines hier beschriebenen Verfahrens näher erläutert. Das Interferometer 100 der Figur 7 weist eine zweigeteilte Teilungsvorrichtung 1011, 1012 auf. Als Amplitudenteiler 1011 und als Amplitudenüberlagerer 1012 der Teilungsvorrichtung 1011, 1012 dient jeweils ein Polarisator, der eine Drehung der Polarisationsrichtung um 45° bewirkt. Die Defokussierungseinheit 102 umfasst in dem gezeigten Ausführungsbeispiel einen doppelbrechenden Kristall (Englisch: birefringent crystal). Ferner beinhalten die beiden Interferometerarme 11, 12 einen Phasenschieber 2031 (Englisch: phase shifter). Der doppelbrechende Kristall 102 weist für unterschiedliche Polarisationsrichtungen eines durch den doppelbrechenden Kristall 102 propagierenden Lichtfelds unterschiedliche Brechungsindizes auf. Der Phasenschieber 2031 bewirkt für unterschiedliche Polarisationsrichtungen eines durch den Phasenschieber 2031 propagierenden Lichtfelds unterschiedliche Phasenverschiebungen. Der Phasenschieber 2031 kann elektrisch kontrollierbar ausgebildet sein.

Eine Polarisation von einem Eingangslichtfeld Ei, das von einem Objekt Oi ausgeht, wird mittels des Amplitudenteilers 1011 um 45° gedreht. Direkt nach dem Amplitudenteiler 1011 weist das Lichtfeld damit eine senkrechte (circa 90° Polarisation) und eine parallele (circa 0° Polarisation) Polarisationskomponente auf (in der Figur 7 schematisch dargestellt). Die senkrechte Polarisationskomponente entspricht dem zweiten Lichtfeld E2 und die parallele Polarisationskomponente entspricht dem ersten Lichtfeld E1. Der erste Interferometerarm 11 und der zweite Interferometerarm 12 des Interferometers 100 der Figur 7 unterscheiden sich somit durch die Polarisationsrichtung, können jedoch entlang derselben Ausbreitungsrichtung verlaufen. Eine räumliche Aufteilung der beiden Lichtfelder E1, E2 ist jedoch auch möglich. Zum erleichtern Verständnis sind das erste Lichtfeld E1 und das zweite Lichtfeld E2 in der Figur 7 jedoch leicht versetzt zueinander gezeichnet.

Das erste Lichtfeld E1 und das zweite Lichtfeld E2 propagieren entlang der beiden Interferometerarme 11, 12 und durch den doppelbrechenden Kristall 102. In dem doppelbrechenden Kristall 102 durchlaufen das erste Lichtfeld E1 und das zweite Lichtfeld E2 aufgrund unterschiedlicher Brechungsindizes für die beiden Polarisationsrichtungen effektiv ein unterschiedliches optisches Medium. Um den Abgleich bei der optischen Pfadlänge zu machen, ist ein geschichteter Aufbau des doppelbrechenden Kristalls empfehlenswert, bei dem über unterschiedliche Materialien und unterschiedliche Brechungsindizes der Gesamteinfluss auf den optischen Pfad für die beiden Polarisationen gleich ist. In den geometrischen Pfad gehen die Brechungsindizes mit einer anderen Abhängigkeit ein (1/n statt n). Damit ist ersichtlich, dass der geometrische Pfad unterschiedlich ist. Hierdurch kann das zweite Lichtfeld E2 relativ zum ersten Lichtfeld E1 defokussiert werden bei gleichzeitig identischer optischer Pfadlänge.

Für eine Kompensation der unterschiedlichen optischen Pfadlängen werden die Phasen der beiden Lichtfelder E1, E2 anschließend mittels des Phasenschiebers 2031 relativ zueinander verschoben. Nach dem Durchlaufen des doppelbrechenden Kristalls 102 und des Phasenschiebers 2031 liegen ein propagiertes erstes Lichtfeld $U1(E1)*e^{i\delta}$ und ein propagiertes zweites Lichtfeld $U2(E2)$ vor. U1 und U2 sind hierbei jeweils Propagatorabbildungen, die bis auf die unterschiedliche Propagation in dem doppelbrechenden Kristall 102 gleich sind. Aufgrund des Phasenschiebers 2031 ist das propagierte erste Lichtfeld $U1(E1)*e^{i\delta}$ relativ zu dem propagierten zweiten Lichtfeld $U2(E2)$ phasenverschoben. Die Polarisationsrichtungen des propagierten ersten Lichtfelds $U1(E1)*e^{i\delta}$ und des propagierten zweiten Lichtfelds $U2(E2)$ stehen jedoch weiterhin senkrecht aufeinander (in der Figur 7 schematisch dargestellt). Mittels des Amplitudenüberlagerers 1012 werden die beiden propagierten Lichtfelder zu einem Ausgangslichtfeld $Ef = U2(E2) + U1(E1)*e^{i\delta}$ überlagert und, analog zu dem Aufbau der Figur 1, auf einem Detektor 300 zur Interferenz gebracht.

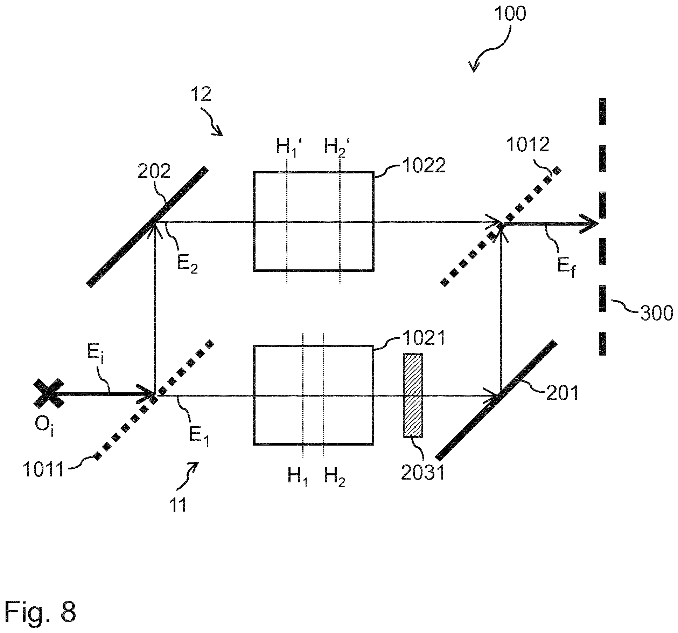

Die Figur 8 zeigt schematisch ein weiteres Ausführungsbeispiel eines hier beschriebenen Interferometers sowie eines hier beschriebenen Verfahrens. In dem Ausführungsbeispiel der Figur 8 umfasst das Interferometer 100 eine zweigeteilte Teilungsvorrichtung 1011, 1012 mit einem Amplitudenteiler 1011 und einem Amplitudenüberlagerer 1012, die jeweils als Strahlteiler ausgebildet sind. Das Eingangslichtfeld Ei wird an dem Amplitudenteiler 1011 in ein erstes Lichtfeld E1, das einen ersten Interferometerarm 11 durchläuft, und ein zweites Lichtfeld E2, das einen zweiten Interferometerarm 12 durchläuft, aufgeteilt. Anschließend werden das erste Lichtfeld E1 und das zweite Lichtfeld E2 an dem Amplitudenüberlagerer 1012 zu einem Ausgangslichtfeld Ef überlagert und auf einem Detektor 300 zur Interferenz gebracht.

Der erste Interferometerarm 11 umfasst einen ersten Spiegel 201 und ein erstes Optiksystem 1021. Der zweite Interferometerarm 12 umfasst einen zweiten Spiegel 202 und ein zweites Optiksystem 1022. Das erste Optiksystem 1021 und das zweite Optiksystem 1021 bilden gemeinsam eine Defokussierungseinheit 1021, 1022. Ferner umfasst der zweite Interferometerarm 12 einen Phasenschieber 2031, der analog zu dem Phasenschieber 2031 des Ausführungsbeispiels der Figur 7 ausgebildet sein kann. Das erste Optiksystem 1021 und das zweite Optiksystem 1022 weisen unterschiedliche Brechungsindizes auf, wodurch die Hauptebenen H1, H2 des ersten Optiksystems 1021 einen anderen Abstand aufweisen als die Hauptebenen H1', H2' des zweiten Optiksystems 1022. Beispielsweise umfassen das erste Optiksystem 1021 und das zweite Optiksystem 1022 jeweils eine dielektrische Platte oder bestehen aus einer dielektrischen Platte. Durch die unterschiedliche Lage der Hauptebenen H1,H2,H1',H2' der beiden Optiksysteme 1021,1022 durchlaufen das erste Lichtfeld E1 und das zweite Lichtfeld E2 in den beiden Interferometerarmen 11,12 unterschiedliche geometrische Pfadlängen. Das zweite Lichtfeld E2 ist damit relativ zu dem ersten Lichtfeld E1 defokussiert. Mittels des Phasenschiebers 2031 als Kompensationseinheit können mögliche Unterschiede in den optischen Propagationsstrecken durch eine Phasenverschiebung kompensiert werden.

Die Bestimmung der Punktspreizfunktion und/oder des komplexen Interferenzterms und deren Auswertung zur Eingangsphase und/oder Eingangsamplitude kann beispielsweise wie im Folgenden beschrieben erfolgen.

Gemäß der in der Optik üblichen Terminologie ist eine Punktspreizfunktion die mathematische Darstellung der Lichtverteilung auf dem Detektor die durch eine Punktquelle erzeugt wird. Hierbei liegen Objekt und Bild bis auf Aberrationen auf konjugierten Ebenen. Im Folgenden werden Aberrationen im Hinblick auf eine einfachere Darstellung nicht berücksichtigt.

In alternativen Interferometeraufbauten, die keine Defokussierungseinheit wie hier beschrieben aufweisen, wird die Punktspreizfunktion üblicherweise für den zentralen Objektpunkt auf der optischen Achse des Systems bestimmt (sogenannte Referenz-Punktspreizfunktion, PSF0) und alle anderen Punktspreizfunktion werden durch Verschieben der Referenz-Punktspreizfunktion erzeugt. Falls eine Punktquelle im Objektraum verschoben wird, so verschiebt sich auch der Schwerpunkt der entsprechenden Punktspreizfunktion (dies gilt analog für die IF-Punktspreizfunktion, siehe unten).

Allgemein ist das gemessene Intensitätsbild in einem Abbildungssystem eine Superposition der Punktspreizfunktion mit Schwerpunkt an unterschiedlichen Orten und jede dieser Punktspreizfunktion entspricht einer räumlich verschobenen Referenz-Punktspreizfunktion. Das Intensitätsbild (I) lässt sich somit wie folgt darstellen.

$$I(x, y) = \sum_s I_s \qquad (8)$$

wobei über alle Punktspreizfunktionen s von PSF0(x-xs', y-ys') summiert wird. Is ist der Intensitätsbeitrag der Punktspreizfunktion s.

Jede Punktspreizfunktion s hat einen spezifischen Ort (xs', ys') auf dem Detektor (mit bekannter Position zs) und jede Punktspreizfunktion s gehört zu einem Objektpunkt $P_s$. Der Objektpunkt $P_s$ hat ebenfalls Koordinaten, die zur Unterscheidung als Großbuchstaben gewählt werden: Xs,Ys,Zs. Der Zusammenhang zwischen xs (ys) und Xs (Ys) ist durch die Abbildung gegeben, insbesondere durch die Abbildung zwischen den konjugierten Ebenen des Objekts und des Bilds. Die Koordinate Zs nimmt hierbei eine Sonderstellung ein, denn sie bezeichnet den Abstand des Objekts von der Messeinrichtung. Bleibt die Bildebene unverändert und verändert man Zs, so führt dies im engen Sinne der geometrischen Optik zu einem Defokus (Aberration).

Die obige Formel (8) ist bis auf mögliche Koordinatentransformationen eine Faltungsformel. Über die Methoden der Fourier-Analyse (Fouriertransformation) kann eine derartige Faltung als Produkt der Fouriertransformierten der Eingangsfunktionen dargestellt werden. Dies erlaubt es aus der Fouriertransformierten der gemessenen Intensität (x,y) und der Fouriertransformierten der vorher bestimmten PSF0(x,y) durch Division die jeweilige Fouriertransformierte von Is zu bestimmen (Is ist eine Funktion von s, wobei s z.B. auch eine zweidimensionale Koordinate (Xs, Ys ) sein kann). Über Rücktransformation wird hieraus dann Is berechnet. Dieses Verfahren ist in der Auflösung limitiert durch die Breite der PSF0(x,y) im Fourierraum.

Eine Aufgabenstellung der Rekonstruktion in der Optik besteht oftmals darin, aus der gemessenen Intensität (x,y) am Detektor möglichst gut die Lage Xs,Ys,Zs der Punktquellen zu bestimmen. Dies ist begrenzt durch die laterale Auflösung (Xs,Ys) und die axiale Auflösung (Tiefenauflösung) Zs. Die Begrenzung tritt darin auf, dass unterschiedliche Xs,Ys,Zs zu Punktspreizfunktion s führen die üblicherweise nicht unterschieden werden können (d.h. unter Berücksichtigung der Messungenauigkeit "gleich" sind).

Die Situation ist in alternativen Interferometeraufbauten meist ungünstig für Zs, denn eine Variation von Zs wird über die damit verbundene Aberration festgestellt. Diese Aberration beschränkt aber die laterale Auflösung und ist generell sehr ungenau. Derartige alternative Interferometeraufbauten können eine schlechte Tiefenauflösung haben. Die damit verbundene Tiefen-Auflösung ist eine Rayleigh-Länge, wobei die Rayleigh-Länge für ein ideal fokussiertes Strahlenbündel einer Punktquelle bestimmt wird.

Bei einem hier beschriebenen Interferometer ist das zu analysierende Feld der komplexe Interferenzterm (IF). Diese kann als Superposition ihrer einzelnen Terme $IF_i$ dargestellt werden. Bei den einzelnen Termen IFi kann es sich um kohärente Interferenzterme gemäß Gleichung (2) oder um komplexe Punktspreizfunktionen handeln, im Folgenden auch mit "IF-Punktspreizfunktionen" bezeichnet. Eine IF-Punktspreizfunktion ist komplexwertig.

Bei einem hier beschriebenen Interferometer liegen das Objekt (z.B. eine Punktquelle) und das Interferenzmuster (also das Bild) nur näherungsweise auf konjugierten Ebenen. Weder der erste Interferometerarm 11 noch der zweite Interferometerarm 12 haben notwendigerweise genau am Ort des Detektors 300 eine konjugierte Ebene zum Objekt. Typischerweise ist dies bei einem hier beschriebenen Interferometer auch nicht der Fall, denn mindestens einer der Interferometerarme 11, 12 enthält eine Defokussierungseinheit 102, 1021, 1022.

Bei einem hier beschriebenen Interferometer wird üblicherweise die Punktspreizfunktion für den zentralen Objektpunkt auf der optischen Achse des Systems, nun jedoch im Abstand Z, bestimmt (sogenannte Referenz-IF-Punktspreizfunktion IF-PSF0 (Z)) und alle anderen IF-Punktspreizfunktion für den Abstand Z werden durch Verschieben der Referenz-IF-Punktspreizfunktion für den Abstand Z erzeugt.

Das gemessene Interferenzmuster des Interferometers ist eine Superposition der IF-Punktspreizfunktion mit Schwerpunkten an unterschiedlichen Orten und jede dieser IF-Punktspreizfunktion entspricht einer räumlich verschobenen IF-Referenz-Punktspreizfunktion IF-PSF0 zum Abstand Z. Im Unterschied zur Situation bei den PSF0 muss bei den IF-PSF0 nach dem Abstand zum Objekt unterschieden werden, denn die IF-PSF0 hängen markant von Z ab.

Das Interferenzmuster lässt sich entsprechend der obigen Formel (8) darstellen, wobei nun über alle IF-PSF0 summiert wird. Is ist dann Intensitätsbeitrag der IF-Punktspreizfunktion s. Jede IF-Punktspreizfunktion s hat einen spezifischen Ort (xs', ys') auf dem Detektor und entspricht einem Punktquellenabstand Zs und jede IF-Punktspreizfunktion s gehört zu einem Objektpunkt $O_s$ mit den Koordinaten Xs,Ys,Zs (siehe oben).

Im Gegensatz zu alternativen Interferometeraufbauten ist die Situation bei einem hier beschriebenen Interferometer für Zs weitaus günstiger, denn eine Variation von Zs verändert zwar die Referenz-IF-Punktspreizfunktion IF-PSF0 aber die Breite im Fourierraum bleibt nahezu unverändert, d.h. auch bei unveränderter Position der Detektionsebene führt dies nicht zu einer Verringerung der lateralen Auflösung. Durch probeweises Testen von IF-PSF0 mit unterschiedlichem Z ist es möglich, das korrekte Z für die Punktquellen zu bestimmen. Die damit verbundene Tiefenauflösung liegt deutlich unter der Rayleigh-Länge.

Enthält das Objekt unterschiedliche Z dann ist es z.B. möglich Rekonstruktionen zu verschiedenen $Z_m$ herzustellen und lokal jeweils das ‚schärfste' Bild zu wählen. Damit können lokal Bereiche mit unterschiedlichen $Z_m$ bestimmt werden. Dies ist ein einfacher Vorschlag für das elektronische Fokussieren. Andere Verfahren werden damit nicht ausgeschlossen.

Bei der Objektrekonstruktion aus dem komplexen Interferenzterm kann es sich hierbei um die Bestimmung der Lage (Xs,Ys,Zs) und/oder Intensitäten (Is) der Punktquellen des Objekts handeln. Die Anwendung der zugehörigen Punktspreizfunktion IF-PSF0(X, Y, Z) auf das Objekt führt im Allgemeinen zu dem gemessenen Interferenzterm. Dies entspricht der Zerlegung des Interferenzterms in unterschiedliche IFi. innerhalb der Auflösungsgrenzen und der Messfehler kann diese Zerlegung eindeutig bestimmt sein.

Die Erfindung ist nicht durch die Beschreibung anhand der Ausführungsbeispiele auf diese beschränkt.

**Bezugszeichenliste**

erster Interferometerarm 11
zweiter Interferometerarm 12
Interferometer 100
Teilungsvorrichtung 101
Defokussierungseinheit 102, 1021, 1022
Abbildungsvorrichtung 103
erster Spiegel 201
zweiter Spiegel 202
Piezoelements 203
Detektors 300
Signalverarbeitungsvorrichtung 600
Eingangsmodul 601
Speichermodul 602
Auswertemodul 603
Amplitudenteiler 1011
Amplitudenüberlagerer 1012
erstes Optiksystem 1021
zweites Optiksystem 1022
Linsen 1031
Arraymaterials 1032
Phasenschieber 2031

**Patentansprüche**

1. Verfahren zur Bestimmung einer Eingangsphase und/oder einer Eingangsamplitude eines Eingangslichtfelds (Ei), umfassend die folgenden Schritte:

   a) Amplitudenteilung des Eingangslichtfelds (Ei) in ein erstes Lichtfeld (E1) und ein zweites Lichtfeld (E2);
   b) Propagation des ersten Lichtfelds (E1) und des zweiten Lichtfelds (E2) derart, dass das erste Lichtfeld (E1) und das zweite Lichtfeld (E2) unterschiedliche geometrische Pfadlängen und identische optische Pfadlängen durchlaufen und das propagierte zweite Lichtfeld (E2) relativ zu dem propagierten ersten Lichtfeld (E1) defokussiert ist;
   c) Amplitudenüberlagerung und Abbildung des propagierten ersten Lichtfelds (E1) und des propagierten zweiten Lichtfelds (E2) auf einen Detektor (300) derart, dass jeweils ein erster Spot (x11, x21, x31) des propagierten ersten Lichtfelds (E1) und jeweils ein zweiter Spot (x12, x22, x32) des propagierten zweiten Lichtfelds (E2) auf dem Detektor (300) zu einem gemeinsamen Ausgangsspot (x1,x2,x3) eines Ausgangslichtfelds (Ef) interferieren und das Ausgangslichtfeld (Ef) an dem Detektor (300) ein Interferenzmuster erzeugt,

   wobei der jeweils erste Spot (x11, x21, x31) des ersten Lichtfelds (Ei) und der jeweils zweite Spot (x12, x22, x32) des zweiten Lichtfelds (E2), die zu einem gemeinsamen Ausgangsspot (x1, x2, x3) des Ausgangslichtfelds (Ef) interferieren, aus demselben Eingangsspot des Eingangslichtfelds (Ei) hervorgehen und wobei das Ausgangslichtfeld (Ef) wenigstens drei Ausgangsspots (x1,x2,x3) aufweist, für die gilt:

   (i) das Ausgangslichtfeld (Ef) ist an unterschiedlichen Ausgangsspots der wenigstens drei Ausgangsspots (x1,x2,x3,...) frei von einer gegenseitigen Kohärenz und
   (ii) das Ausgangslichtfeld (Ef) weist innerhalb eines Ausgangsspots der wenigstens drei Ausgangsspots (x1,x2,x3,...) zumindest partielle räumliche Kohärenz auf;

   d) Messen zumindest eines Teils des Interferenzmusters mit dem Detektor (300) und Bestimmen eines komplexen Interferenzterms (IF) aus dem gemessenen Interferenzmuster; und
   e) Zumindest teilweises Ermitteln der Eingangsphase und/oder der Eingangsamplitude aus dem komplexen Interferenzterm (IF).

2. Verfahren nach dem vorherigen Anspruch, wobei das propagierte zweite Lichtfeld (E2) relativ zu dem propagierten ersten Lichtfeld (E1) entlang einer optischen Achse verschoben ist.

3. Verfahren nach einem der beiden vorherigen Ansprüche, wobei mit einer zusätzlichen Einstellvorrichtung ein Gangunterschied zwischen dem ersten Lichtfeld (E1) und dem zweiten Lichtfeld (E2) eingestellt wird, wobei der Gangunterschied wenigstens ein Viertel der Wellenlänge des Eingangslichtfelds (Ei) beträgt.

4. Verfahren nach einem der vorherigen Ansprüche, wobei das Eingangslichtfeld (Ei) von einem Objekt mit einem abbildenden optischen System abgestrahlt wird und wobei das Eingangslichtfeld (Ei), bezogen auf eine Schnittebene, eine Superposition zueinander inkohärenter Eingangsspots des Eingangslichtfelds (Ei) ist, wobei die Schnittebene zumindest näherungsweise eine konjugierte Ebene des abbildenden optischen Systems des Objekts ist.

5. Verfahren nach einem der vorherigen Ansprüche, wobei für jeden Ausgangsspot (x1,x2,x3,...) ein komplexer Spotinterferenzterm (IF1,IF2,IF3,...) ermittelt wird und wobei der komplexe Interferenzterm (IF) als eine Superposition der komplexen Spotinterferenzterme (IF1,IF2,IF3,...) dargestellt wird.

6. Verfahren nach einem der vorherigen Ansprüche, wobei jeder Ausgangsspot auf eine Vielzahl von Pixeln des Detektors (300) abgebildet wird, wobei für jedes Pixel ein komplexer Pixelinterferenzterm ermittelt wird und wobei der komplexe Spotinterferenzterm (IF1,IF2,IF3,...) aus den Werten der komplexen Pixelinterferenzterme besteht.

7. Verfahren nach einem der vorherigen Ansprüche, wobei das propagierte erste Lichtfeld (E1) und das propagierte zweite Lichtfeld (E2) derart auf den Detektor (300) abgebildet werden, dass sich der Detektor (300) näherungsweise in der Bildebene der Abbildung befindet.

8. Verfahren nach einem der vorherigen Ansprüche, wobei das Messen des Interferenzmusters das Messen der Phase und der Amplitude des Interferenzmusters beinhaltet.

9. Verwendung eines Verfahrens gemäß einem der vorherigen Ansprüche in zumindest einer der folgenden Anwendungen:

   - elektronische Fokussierung;
   - Bildkorrektur, insbesondere Schärfen eines Bildes;
   - Aberrationskorrektur eines optischen Systems;
   - Vermessung der Oberflächenstruktur eines dreidimensionalen Objekts;
   - Vermessung von Objekten mit zeitlich partiell inkohärenten Lichtquellen und/oder mittels Photolumineszenz
   - Vermessung des Aufbaus dünner Schichten;
   - Messung von Phasenobjekten, insbesondere phasensensitive Hellfeld-Messung oder Dunkelfeld-Mikroskopie;
   - Lagebestimmung eines Objektes in einem dreidimensionalen Raum.

10. Verwendung nach dem vorherigen Anspruch, wobei das Verfahren zur Bildkorrektur und/oder zur elektronischen Fokussierung eines Bildes verwendet wird, wobei das zu korrigierende Bild mit einer Abbildungsvorrichtung aufgenommen wurde und wobei das zu korrigierende Bild nahe einem Fokus der Abbildungsvorrichtung, jedoch nicht im Fokus der Abbildungsvorrichtung, aufgenommen wurde.

11. Interferometer (100) zur Bestimmung einer Eingangsphase und/oder einer Eingangsamplitude eines Eingangslichtfelds (Ei), umfassend eine Teilungsvorrichtung (101,1011,1012), eine Abbildungsvorrichtung (103) und einen Detektor (300), wobei

   - die Teilungsvorrichtung (101,1011,1012) einen ersten Interferometerarm (11) und einen zweiten Interferometerarm (12) definiert, wobei der zweite Interferometerarm (12) eine Defokussierungseinheit (102,1021,1022) aufweist;
   - die Teilungsvorrichtung (101,1011,1012) dazu eingerichtet ist, das Eingangslichtfeld (Ei) mittels Amplitudenteilung in ein erstes Lichtfeld (E1) und ein zweites Lichtfeld (E2) aufzuteilen;
   - die Teilungsvorrichtung (101,1011,1012) und die Abbildungsvorrichtung (103) dazu eingerichtet und justiert sind, das entlang des ersten Interferometerarms (11) propagierte erste Lichtfeld (E1) und das entlang des zweiten Interferometerarms (12) propagierte zweite Lichtfeld (E2) derart mittels Amplitudenüberlagerung zu überlagern und derart auf den Detektor (300) abzubilden, dass jeweils ein erster Spot (x11, x21, x31) des ersten Lichtfelds (E1) und jeweils ein zweiter Spot (x12, x22, x32) des zweiten Lichtfelds (E2) an dem Detektor (300) zu einem gemeinsamen Ausgangsspot (x1, x2, x3) eines Ausgangslichtfelds (Ef) interferieren und das Ausgangslichtfeld (Ef) an dem Detektor (300) ein Interferenzmuster erzeugt;
   - der Detektor (300) eine Vielzahl von Spotpixeln aufweist und dazu eingerichtet ist, zumindest einen Teil des Interferenzmusters zu messen;

- die Defokussierungseinheit (102,1021,1022) dazu eingerichtet ist, die geometrische Pfadlänge des zweiten Lichtfelds (E2) derart zu verändern, dass das erste Lichtfeld (E1) und das zweite Lichtfeld (E2) unterschiedliche geometrische Pfadlängen und identische optische Pfadlängen durchlaufen und das entlang dem zweiten Interferometerarm (12) propagierte zweite Lichtfeld (E2) relativ zu dem ersten Lichtfeld (E1) zu defokussieren; und
- die Defokussierungseinheit (102,1021,1022), die Teilungsvorrichtung (101,1011,1012), die Abbildungsvorrichtung (103) und der Detektor (300) derart eingerichtet und justiert sind, dass der Ausgangsspot (x1,x2,x3) auf die Vielzahl von Spotpixeln trifft, wobei für wenigstens 10% der Spotpixel ein Phasenunterschied modulo $2\pi$ zwischen dem ersten Lichtfeld (E1) und dem zweiten Lichtfeld (E2) am Ort der Spotpixel um mehr als $0,1$ $\pi$ variiert.

12. Interferometer (100) nach dem vorherigen Anspruch, wobei die Defokussierungseinheit (102,1021,1022) zumindest eine der folgenden Komponenten aufweist oder aus einer der folgenden Komponenten besteht: ein dielektrisches Medium, insbesondere eine dielektrische Platte; ein refraktives System, insbesondere eine Linse; ein diffraktives System mit einer Translationssymmetrie, insbesondere ein Gitter; ein verstellbarer Spiegel, insbesondere ein Piezoverstellbarer Spiegel.

13. Interferometer (100) nach einem der vorherigen Ansprüche, wobei die Defokussierungseinheit (102,1021,1022), die Teilungsvorrichtung (101,1011,1012), die Abbildungsvorrichtung (103) und der Detektor (300) derart eingerichtet und justiert sind, dass das Ausgangslichtfeld (Ef) wenigstens drei Ausgangsspots (x1,x2,x3) aufweist, wobei für die wenigstens drei Ausgangsspots (x1,x2,x3) gilt:

(i) das Ausgangslichtfeld (Ef) ist an unterschiedlichen Ausgangsspots (x1,x2,x3) der wenigstens drei Ausgangsspots (x1,x2,x3) frei von einer gegenseitigen Kohärenz und
(ii) das Ausgangslichtfeld (Ef) weist innerhalb eines Ausgangsspots (x1,x2,x3) der wenigstens drei Ausgangsspots (x1,x2,x3) zumindest partielle räumliche Kohärenz auf.

14. Interferometer (100) nach einem der vorherigen Ansprüche, wobei die Defokussierungseinheit (102,1021,1022) dazu eingerichtet ist, die optische Pfadlänge des zweiten Interferometerarms (12) zu verändern.

15. Interferometer (100) nach dem vorherigen Anspruch, wobei sich die geometrische Pfadlänge des zweiten Interferometerarms (12) um wenigstens 0,1 mm von der geometrischen Pfadlänge des ersten Interferometerarms (11) unterscheidet.

16. Interferometer (100) nach einem der vorherigen Ansprüche, ferner umfassend eine Signalverarbeitungsvorrichtung (600), umfassend:

- ein Eingangsmodul (601) das dazu eingerichtet ist, aus einem von dem Detektor (300) stammenden Signal (S1,S2,S3,...) einen komplexen Interferenzterm (IF) zu ermitteln;
- ein Speichermodul (602) umfassend eine Propagatorabbildung (U) und/oder eine Punktspreizfunktion, wobei die Propagatorabbildung (U) eine Propagation des propagierten ersten Lichtfeldes (E1) in das propagierte zweite Lichtfeld (E2) beschreibt, wobei das propagierte zweite Lichtfeld (E2) relativ zu dem propagierten ersten Lichtfeld (E1) defokussiert ist;
- ein Auswertemodul (603) das dazu eingerichtet ist, aus dem komplexen Interferenzterm (IF) und der Propagatorabbildung (U) und/oder der Punktspreizfunktion die Eingangsphase und/oder die Eingangsamplitude des Eingangslichtfelds (Ei) zu bestimmen.

17. Interferometer (100) nach dem vorherigen Anspruch, wobei das Speichermodul (602) ferner eine Referenzdatenbank umfasst, wobei die Referenzdatenbank komplexe Vergleichsinterferenzterme umfasst, wobei die komplexen Vergleichsinterferenzterme mittels Berechnung und/oder Kalibration ermittelt wurden und wobei das Auswertemodul (603) dazu eingerichtet ist, aus dem Signal (S1,S2,S3,...) mittels Vergleich mit den komplexen Vergleichsinterferenztermen den komplexen Interferenzterm (IF) zu ermitteln.

**Claims**

1. Method for determining an input phase and/or an input amplitude of an input light field (Ei), comprising the following steps:

a) splitting the amplitude of the input light field (Ei) into a first light field (E1) and a second light field (E2);

b) propagating the first light field (E1) and the second light field (E2) in such a way that the first light field (E1) and the second light field (E2) traverse different geometric path lengths and identical optical path lengths and the propagated second light field (E2) is defocused relative to the propagated first light field (E1);

c) superposing the amplitudes and imaging the propagated first light field (E1) and the propagated second light field (E2) onto a detector (300) in such a way that in each case a first spot (x11, x21, x31) of the propagated first light field (E1) and a second spot (x12, x22, x32) of the propagated second light field (E2) interfere on the detector (300) to form a common output spot (x1, x2, x3) of an output light field (Ef), and the output light field (Ef) generates an interference pattern at the detector (300),

wherein the respective first spot (x11, x21, x31) of the first light field (Ei) and the respective second spot (x12, x22, x32) of the second light field (E2), which interfere to form a common output spot (x1, x2, x3) of the output light field (Ef), originate from the same input spot of the input light field (Ei), and

wherein the output light field (Ef) has at least three output spots (x1, x2, x3), for which the following applies:

(i) the output light field (Ef) is free from mutual coherence at different output spots of the at least three output spots (x1, x2, x3, ...), and

(ii) the output light field (Ef) exhibits at least partial spatial coherence within an output spot of the at least three output spots (x1, x2, x3, ...);

d) measuring at least a portion of the interference pattern by means of the detector (300), and determining a complex interference term (IF) from the measured interference pattern; and

e) at least partially determining the input phase and/or the input amplitude from the complex interference term (IF).

2.  Method according to the preceding claim, wherein the propagated second light field (E2) is shifted relative to the propagated first light field (E1) along an optical axis.

3.  Method according to any of the two preceding claims, wherein a path difference between the first light field (E1) and the second light field (E2) is adjusted by means of an additional adjustment device, wherein the path difference is at least one quarter of the wavelength of the input light field (Ei).

4.  Method according to any of the preceding claims, wherein the input light field (Ei) is emitted by an object having an imaging optical system, and wherein the input light field (Ei), with respect to a section plane, is a superposition of mutually incoherent input spots of the input light field (Ei), the section plane being at least approximately a conjugate plane of the imaging optical system of the object.

5.  Method according to any of the preceding claims, wherein a complex spot interference term (IF1, IF2, IF3, ...) is determined for each output spot (x1, x2, x3, ...), and wherein the complex interference term (IF) is represented as a superposition of the complex spot interference terms (IF1, IF2, IF3, ...).

6.  Method according to any of the preceding claims, wherein each output spot is mapped to a plurality of pixels of the detector (300), wherein a complex pixel interference term is determined for each pixel, and wherein the complex spot interference term (IF1, IF2, IF3, ...) consists of the values of the complex pixel interference terms.

7.  Method according to any of the preceding claims, wherein the propagated first light field (E1) and the propagated second light field (E2) are imaged onto the detector (300) such that the detector (300) is approximately in the image plane of the image.

8.  Method according to any of the preceding claims, wherein measuring the interference pattern includes measuring the phase and the amplitude of the interference pattern.

9.  Use of a method according to any of the preceding claims in at least one of the following applications:

- electronic focusing;
- image correction, especially sharpening of an image;
- aberration correction of an optical system;
- measurement of the surface structure of a three-dimensional object;
- measurement of objects with temporally partially incoherent light sources and/or by means of photoluminescence;
- measurement of the structure of thin films;
- measurement of phase objects, especially phase-sensitive bright field measurement or dark field microscopy;
- determination of the position of an object in a three-dimensional space.

10. Use according to the preceding claim, wherein the method is used for image correction and/or electronic focusing of an image, wherein the image to be corrected was captured using an imaging device, and wherein the image to be corrected was captured near a focus of the imaging device, but not at the focus of the imaging device.

11. Interferometer (100) for determining an input phase and/or an input amplitude of an input light field (Ei), comprising a splitting device (101, 1011, 1012), an imaging device (103) and a detector (300), wherein

- the splitting device (101, 1011, 1012) defines a first interferometer arm (11) and a second interferometer arm (12), the second interferometer arm (12) having a defocusing unit (102, 1021, 1022);
- the splitting device (101, 1011, 1012) is configured to split the input light field (Ei) into a first light field (E1) and a second light field (E2) by means of amplitude splitting;
- the splitting device (101, 1011, 1012) and the imaging device (103) are configured and adjusted to superpose the first light field (E1) propagated along the first interferometer arm (11) and the second light field (E2) propagated along the second interferometer arm (12) by means of amplitude superposition and to image them onto the detector (300) in such a way that in each case a first spot (x11, x21, x31) of the first light field (E1) and a second spot (x12, x22, x32) of the second light field (E2) interfere at the detector (300) to form a common output spot (x1, x2, x3) of an output light field (Ef), and the output light field (Ef) generates an interference pattern at the detector (300);
- the detector (300) comprises a plurality of spot pixels and is configured to measure at least a portion of the interference pattern;
- the defocusing unit (102, 1021, 1022) is configured to change the geometric path length of the second light field (E2) in such a way that the first light field (E1) and the second light field (E2) traverse different geometric path lengths and identical optical path lengths, and to defocus the second light field (E2) propagated along the second interferometer arm (12) relative to the first light field (E1); and
- the defocusing unit (102, 1021, 1022), the splitting device (101, 1011, 1012), the imaging device (103) and the detector (300) are configured and adjusted such that the output spot (x1, x2, x3) is incident on the plurality of spot pixels, wherein for at least 10% of the spot pixels a phase difference modulo $2\pi$ between the first light field (E1) and the second light field (E2) varies by more than $0.1\pi$ at the location of the spot pixels.

12. Interferometer (100) according to the preceding claim, wherein the defocusing unit (102, 1021, 1022) comprises or consists of at least one of the following components: a dielectric medium, in particular a dielectric plate; a refractive system, in particular a lens; a diffractive system with a translational symmetry, in particular a grating; an adjustable mirror, in particular a piezo-adjustable mirror.

13. Interferometer (100) according to any of the preceding claims, wherein the defocusing unit (102, 1021, 1022), the splitting device (101, 1011, 1012), the imaging device (103) and the detector (300) are configured and adjusted such that the output light field (Ef) has at least three output spots (x1, x2, x3), wherein for the at least three output spots (x1, x2, x3) the following applies:

(i) the output light field (Ef) is free from mutual coherence at different output spots (x1, x2, x3) of the at least three output spots (x1, x2, x3), and
(ii) the output light field (Ef) exhibits at least partial spatial coherence within an output spot (x1, x2, x3) of the at least three output spots (x1, x2, x3).

14. Interferometer (100) according to any of the preceding claims, wherein the defocusing unit (102, 1021, 1022) is configured to change the optical path length of the second interferometer arm (12).

15. Interferometer (100) according to the preceding claim, wherein the geometric path length of the second interferometer arm (12) differs from the geometric path length of the first interferometer arm (11) by at least 0.1 mm.

16. Interferometer (100) according to any of the preceding claims, further comprising a signal processing device (600), comprising:

- an input module (601) which is configured to determine a complex interference term (IF) from a signal (S1, S2, S3, ...) originating from the detector (300);
- a memory module (602) comprising a propagator mapping (U) and/or a point spread function, wherein the propagator mapping (U) describes a propagation of the propagated first light field (E1) into the propagated second light field (E2), wherein the propagated second light field (E2) is defocused relative to the propagated first light field (E1);
- an evaluation module (603) which is configured to determine the input phase and/or the input amplitude of the input light field (Ei) from the complex interference term (IF) and the propagator mapping (U) and/or the point spread function.

17. Interferometer (100) according to the preceding claim, wherein the memory module (602) further comprises a reference database, wherein the reference database comprises complex comparison interference terms, wherein the complex comparison interference terms have been determined by means of calculation and/or calibration, and wherein the evaluation module (603) is configured to determine the complex interference term (IF) from the signal (S1, S2, S3, ...) by means of comparison with the complex comparison interference terms.


**Revendications**

1. Procédé de détermination d'une phase d'entrée et/ou d'une amplitude d'entrée d'un champ lumineux d'entrée (Ei), comprenant les étapes suivantes :

    a) division de l'amplitude du champ lumineux d'entrée (Ei) en un premier champ lumineux (E1) et un deuxième champ lumineux (E2) ;
    b) propagation du premier champ lumineux (E1) et du deuxième champ lumineux (E2) de sorte que le premier champ lumineux (E1) et le deuxième champ lumineux (E2) parcourent des longueurs de chemin géométrique différentes et des longueurs de chemin optique égales, et que le deuxième champ lumineux propagé (E2) soit défocalisé par rapport au premier champ lumineux propagé (E1) ;
    c) superposition d'amplitudes et représentation sur un détecteur (300) du premier champ lumineux propagé (E1) et du deuxième champ lumineux propagé (E2), de sorte qu'un premier spot (x11, x21, x31) respectif du premier champ lumineux propagé (E1) et un deuxième spot (x12, x22, x32) respectif du deuxième champ lumineux propagé (E2) interfèrent sur le détecteur (300) en un spot de sortie commun (x1, x2, x3) d'un champ lumineux de sortie (Ef) et que le champ lumineux de sortie (Ef) génère une figure d'interférence sur le détecteur (300), le premier spot (x11, x21, x31) respectif du premier champ lumineux (Ei) et le deuxième spot (x12, x22, x32) respectif du deuxième champ lumineux (E2) interférant en un spot de sortie commun (x1, x2, x3) du champ lumineux de sortie (Ef), provenant du même spot d'entrée du champ lumineux d'entrée (Ei), et
    le champ lumineux de sortie (Ef) présentant au moins trois spots de sortie (x1, x2, x3) pour lesquels :

        (i) le champ lumineux de sortie (Ef) est exempt de cohérence réciproque sur différents spots de sortie des au moins trois spots de sortie (x1, x2, x3, ...) et
        (ii) le champ lumineux de sortie (Ef) présente une cohérence spatiale au moins partielle à l'intérieur d'un spot de sortie des au moins trois spots de sortie (x1, x2, x3, ...) ;

    d) mesure d'au moins une partie de la figure d'interférence avec le détecteur (300) et détermination d'un terme d'interférence complexe (IF) à partir de la figure d'interférence mesurée ; et
    e) détermination au moins partielle de la phase d'entrée et/ou de l'amplitude d'entrée à partir du terme d'interférence complexe (IF).

2. Procédé selon la revendication précédente, où le deuxième champ lumineux propagé (E2) est déplacé le long d'un axe optique par rapport au premier champ lumineux propagé (E1).

3. Procédé selon l'une des deux revendications précédentes, où un degré de retard entre le premier champ lumineux (E1) et le deuxième champ lumineux (E2) est réglé au moyen d'un dispositif de réglage supplémentaire, le degré de retard étant égal à au moins un quart de la longueur d'onde du champ lumineux d'entrée (Ei).

4. Procédé selon l'une des revendications précédentes, où le champ lumineux d'entrée (Ei) est émis par un objet avec un système optique d'imagerie et où, par rapport à un plan de coupe, le champ lumineux d'entrée (Ei) est une superposition de spots d'entrée réciproquement incohérents du champ lumineux d'entrée (Ei), le plan de coupe étant au moins approximativement un plan conjugué du système optique d'imagerie de l'objet.

5. Procédé selon l'une des revendications précédentes, où un terme d'interférence de spot complexe (IF1, IF2, IF3, ...) est déterminé pour chaque spot de sortie (x1, x2, x3, ...) et où le terme d'interférence complexe (IF) est représenté comme une superposition des termes d'interférence de spot complexes (IF1, IF2, IF3, ...).

6. Procédé selon l'une des revendications précédentes, où chaque spot de sortie est représenté sur une pluralité de pixels du détecteur (300), un terme d'interférence de pixel complexe étant déterminé pour chaque pixel, et le terme d'interférence de spot complexe (IF1, IF2, IF3, ...) étant constitué des valeurs des termes d'interférence de pixel complexes.

7. Procédé selon l'une des revendications précédentes, où le premier champ lumineux (E1) propagé et le deuxième champ lumineux (E2) propagé sont représentés sur le détecteur (300) de sorte que le détecteur (300) se trouve approximativement dans le plan focal de la représentation.

8. Procédé selon l'une des revendications précédentes, où la mesure de la figure d'interférence comprend la mesure de la phase et de l'amplitude de la figure d'interférence.

9. Utilisation d'un procédé selon l'une des revendications précédentes dans au moins l'une des applications suivantes :

   - focalisation électronique ;
   - correction d'image, en particulier accentuation de la netteté d'une image ;
   - correction des aberrations d'un système optique ;
   - mesure de la structure de surface d'un objet tridimensionnel ;
   - mesure d'objets avec des sources lumineuses partiellement incohérentes dans le temps et/ou par photoluminescence ;
   - mesure de la structure de couches minces ;
   - mesure d'objets de phase, en particulier mesure en champ clair sensible à la phase ou microscopie en champ sombre ;
   - détermination de la position d'un objet dans un espace tridimensionnel.

10. Utilisation selon la revendication précédente, où le procédé est utilisé pour la correction d'image et/ou la focalisation électronique d'une image, l'image à corriger ayant été captée avec un dispositif d'imagerie et l'image à corriger ayant été captée près d'un foyer du dispositif d'imagerie, mais pas au foyer du dispositif d'imagerie.

11. Interféromètre (100) pour déterminer une phase d'entrée et/ou une amplitude d'entrée d'un champ lumineux d'entrée (Ei), comprenant un dispositif de division (101, 1011, 1012), un dispositif d'imagerie (103) et un détecteur (300), où

   - le dispositif de division (101, 1011, 1012) définit un premier bras d'interféromètre (11) et un deuxième bras d'interféromètre (12), le deuxième bras d'interféromètre (12) comprenant une unité de défocalisation (102, 1021, 1022) ;
   - le dispositif de division (101, 1011, 1012) est conçu pour diviser le champ lumineux d'entrée (Ei) en un premier champ lumineux (E1) et un deuxième champ lumineux (E2) au moyen d'une division d'amplitude ;
   - le dispositif de division (101, 1011, 1012) et le dispositif d'imagerie (103) sont conçus et réglés pour superposer le premier champ lumineux (E1) propagé le long du premier bras d'interféromètre (11) et le deuxième champ lumineux (E2) propagé le long du deuxième bras d'interféromètre (12) au moyen d'une superposition d'amplitudes et pour les représenter sur le détecteur (300) de sorte qu'un premier spot (x11, x21, x31) respectif du premier champ lumineux (E1) et un deuxième spot (x12, x22, x32) respectif du deuxième champ lumineux (E2) interfèrent sur le détecteur (300) en un spot de sortie commun (x1, x2, x3) d'un champ lumineux de sortie (Ef) et que le champ lumineux de sortie (Ef) génère une figure d'interférence sur le détecteur (300) ;
   - le détecteur (300) comprend une pluralité de pixels de spot et est adapté pour mesurer au moins une partie de la figure d'interférence ;
   - l'unité de défocalisation (102, 1021, 1022) est adaptée pour modifier la longueur de chemin géométrique du deuxième champ lumineux (E2) de sorte que le premier champ lumineux (E1) et le deuxième champ lumineux (E2) parcourent des longueurs de chemin géométriques différentes et des longueurs de chemin optique égales, et pour défocaliser le deuxième champ lumineux propagé (E2) propagé le long du deuxième bras d'interféromètre (12) par rapport au premier champ lumineux (E1) ; et
   - l'unité de défocalisation (102, 1021, 1022), le dispositif de division (101, 1011, 1012), le dispositif d'imagerie (103) et le détecteur (300) sont agencés et réglés de sorte que le spot de sortie (x1, x2, x3) rencontre la pluralité de pixels de spot, où, pour au moins 10 % des pixels de spot, une différence de phase modulo 2π entre le premier champ lumineux (E1) et le deuxième champ lumineux (E2) varie de plus de 0,1 π à l'emplacement des pixels de spot.

12. Interféromètre (100) selon la revendication précédente, où l'unité de défocalisation (102, 1021, 1022) comprend au moins l'un des composants suivants, ou est constituée de l'un des composants suivants : un milieu diélectrique, en particulier une plaque diélectrique ; un système réfractif, en particulier une lentille ; un système diffractif à symétrie de translation, en particulier un réseau ; un miroir ajustable, en particulier un miroir piézo-ajustable.

13. Interféromètre (100) selon l'une des revendications précédentes, où l'unité de défocalisation (102, 1021, 1022), le dispositif de division (101, 1011, 1012), le dispositif d'imagerie (103) et le détecteur (300) sont agencés et réglés de sorte que le champ lumineux de sortie (Ef) présente au moins trois spots de sortie (x1, x2, x3), où, pour les au moins trois spots de sortie (x1, x2, x3) :

(i) le champ lumineux de sortie (Ef) est exempt de cohérence réciproque au niveau de différents spots de sortie (x1, x2, x3) des au moins trois spots de sortie (x1, x2, x3) et (ii) le champ lumineux de sortie (Ef) présente une cohérence spatiale au moins partielle à l'intérieur d'un spot de sortie (x1, x2, x3) des au moins trois spots de sortie (x1, x2, x3).

14. Interféromètre (100) selon l'une des revendications précédentes, où l'unité de défocalisation (102, 1021, 1022) est adaptée pour modifier la longueur de chemin optique du deuxième bras d'interféromètre (12).

15. Interféromètre (100) selon la revendication précédente, où la longueur de chemin géométrique du deuxième bras d'interféromètre (12) diffère d'au moins 0,1 mm de la longueur de chemin géométrique du premier bras d'interféromètre (11).

16. Interféromètre (100) selon l'une des revendications précédentes, comprenant en outre un dispositif de traitement de signal (600) comprenant :

- un module d'entrée (601) conçu pour déterminer un terme d'interférence complexe (IF) à partir d'un signal (S1, S2, S3, ...) provenant du détecteur (300) ;
- un module de mémoire (602) comprenant une image de propagateur (U) et/ou une fonction d'étalement de point, l'image de propagateur (U) décrivant une propagation du premier champ lumineux propagé (E1) dans le deuxième champ lumineux propagé (E2), le deuxième champ lumineux propagé (E2) étant défocalisé par rapport au premier champ lumineux propagé (E1) ;
- un module d'évaluation (603) conçu pour déterminer la phase d'entrée et/ou l'amplitude d'entrée du champ lumineux d'entrée (Ei) à partir du terme d'interférence complexe (IF) et de l'image de propagateur (U) et/ou de la fonction d'étalement de point.

17. Interféromètre (100) selon la revendication précédente, où le module de mémoire (602) comprend en outre une base de données de référence, où la base de données de référence comprend des termes d'interférence de comparaison complexes, où les termes d'interférence de comparaison complexes ont été déterminés au moyen d'un calcul et/ou d'un étalonnage et où le module d'évaluation (603) est adapté pour déterminer le terme d'interférence complexe (IF) à partir du signal (S1, S2, S3, ...) au moyen d'une comparaison avec les termes d'interférence de comparaison complexes.

Fig. 1

Fig. 2

E$_{22}$    E$_{2,2}$

102

α$_l$

n$_M$

H1    H2

n

d

Fig. 3

1032

1031

b

103

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017211665 A1

**In der Beschreibung aufgeführte Nicht-Patentliteratur**

- Whole optical wavefields reconstruction by Digital Holography. **S. GRILLI et al.** Optics Express. OSA Publishing, 10. September 2001, vol. 9, 294-302